# EUROPEAN PATENT APPLICATION

(11) **EP 4 679 242 A1**
(43) Date of publication of application: **14.01.2026**
(21) Application number: 24802622.1
(22) Date of filing: 22.03.2024
(51) Int. Cl.: G06F 3/0481, G11B 27/031

(54) **CALL METHOD AND ELECTRONIC DEVICE**

(30) Priority: 10.05.2023 CN 202310522265
(71) Applicant: Honor Device Co., Ltd., Shenzhen, Guangdong 518040 (CN)
(72) Inventor: PANG, Haotian, Shenzhen, Guangdong 518040 (CN)
(74) Representative: Isarpatent
(86) International application number: PCT/CN2024/083197
(87) International publication number: WO 2024/230334

(57) **Abstract**

This application provides an invoking method and an electronic device. The method includes: In response to a received user operation, an electronic device displays a tag operation block in an application interface, and invokes a specified function of another electronic device. In a process of invoking the another electronic device, the electronic device may change a tag operation block based on a received user operation, invoke another specified function of the another electronic device, and obtain an insertion object obtained by the another electronic device based on the another function. The electronic device may display the insertion object at a position of the tag operation block. Therefore, a simple invoking method is provided, so that invoking of the another electronic device can be implemented by performing a simple operation, and content specified by a user is inserted by invoking the another electronic device.

## Description

This application claims priority to Chinese Patent Application No. 202310522265.7, filed with the China National Intellectual Property Administration on May 10, 2023 and entitled "INVOKING METHOD AND ELECTRONIC DEVICE", which is incorporated herein by reference in its entirety.

### TECHNICAL FIELD

This application relates to the field of terminal devices, and in particular, to an invoking method and an electronic device.

### BACKGROUND

With rapid development of terminal technologies, a terminal provides more functions and has more extensive application scenarios. For example, in a learning process, a user may make class notes by using software such as Notepad provided by the terminal. In a recording process, while making recording by using characters, the user may further insert a photo or an image, to enrich note content.

### SUMMARY

This application provides an invoking method and an electronic device. According to the method, in a recording process, another electronic device may be invoked to insert specified content, to simplify an operation and weaken impact on a current application, thereby improving user experience.

According to a first aspect, this application provides an invoking method. The method includes: A first electronic device displays a first application interface. Input content and a first option are displayed in the first application interface. The first electronic device receives a first operation performed by a user on the first option. The first electronic device displays a first tag operation block in the first application interface in response to the received first operation, and the first electronic device sends a first invoking request to a second electronic device. The first invoking request is used to request to invoke a first target function of the second electronic device. In addition, the first tag operation block includes first tag information, and the first tag information is used to indicate that the first electronic device is invoking the first target function of the second electronic device. Then, in a process in which the first electronic device invokes the first target function of the second electronic device, the first electronic device displays a first tag option box in response to a received tap operation performed on the first tag operation block. The first tag option box includes at least one second electronic device invoking option, and the at least one second electronic device invoking option corresponds to at least one function that is in the second electronic device and that is capable of being invoked by the first electronic device. The first electronic device updates the first tag information to second tag information in response to a received tap operation performed on a first invoking option, and the first electronic device sends a second invoking request to the second electronic device. The second invoking request is used to request to invoke a second target function of the second electronic device, the second tag information is used to indicate that the electronic device is invoking the second target function of the second electronic device, and the first invoking option belongs to the at least one second electronic device invoking option. Then, the first electronic device receives a first insertion object sent by the second electronic device. The first insertion object is obtained by the second electronic device based on the second target function, and is sent to the first electronic device. The first electronic device replaces the first tag operation block with the first insertion object. In this way, the user in this application performs a simple operation, for example, taps the first option, so that another electronic device (for example, the second electronic device) can be invoked in a process of using a first application, and invokes a specified function of the another electronic device, to obtain insertion content that meets a user requirement. In addition, in a process of invoking the another electronic device, the user may perform a corresponding operation on an inserted tag operation block at any time, to change the specified function that is being invoked, thereby meeting different requirements in different scenarios.

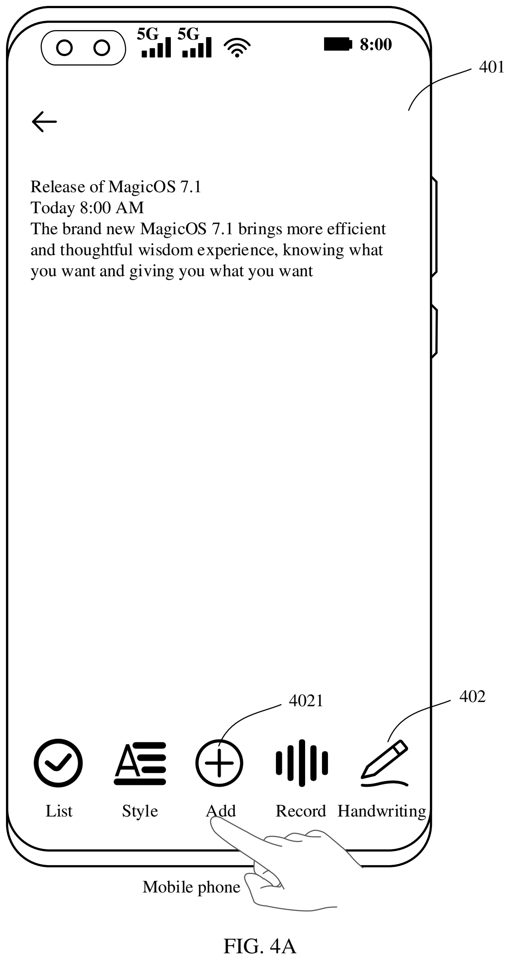

In some instances, the first option may be a "Take photo" option in FIG. 4A to FIG. 4C. Correspondingly, the first target function may be a photographing function of the second electronic device.

In some instances, the first electronic device may be an electronic device such as a mobile phone, a tablet, a wearable device, or a vehicle-mounted device. The second electronic device may also be an electronic device such as a mobile phone, a tablet, a wearable device, or a vehicle-mounted device.

In some instances, an insertion object may be a file such as an image, a character, or a voice.

In a possible implementation, that the first electronic device replaces the first tag operation block with the first insertion object includes: The first electronic device cancels display of the first tag operation block. The first electronic device inserts the first insertion object at an original display position of the first tag operation block. In this way, in this application, occupation is performed by using the first tag operation block, so that the insertion object may be inserted at the original display position of the tag operation block.

In some instances, a length of the tag operation block is greater than a length of tag information.

In some embodiments, a height of the tag operation block is less than or equal to a line height.

In some instances, the original display position of the tag operation block is a position corresponding to a left edge of the tag operation block.

In a possible implementation, the first tag operation block is displayed at an end of the input content. In this way, the first tag operation block may be displayed at a default position, namely, the end of the input content, so that a subsequently displayed insertion object is also displayed at the end of the input content.

In a possible implementation, the first tag operation block is displayed at a position corresponding to a last editing operation performed on the input content. In this way, the first tag operation block may be displayed at a default position, namely, the position corresponding to the last editing operation, so that a subsequently displayed insertion object is also displayed at the position.

In some instances, the position corresponding to the last editing operation may be the end of the input content.

In some instances, the position corresponding to the last editing operation may also be any position in the input content.

In a possible implementation, before the first electronic device receives the first operation performed on the first option in the first application interface, the method further includes: The first electronic device displays a cursor at a first position in response to a received second operation performed at the first position. That the first electronic device displays a first tag operation block at a first position in the first application interface includes: inserting the first tag operation block at a position at which the cursor is located. In this way, the user may move the cursor to indicate to display the first tag operation block at the position at which the cursor is located, so that the tag operation block is displayed at any position specified by the user. Further, the insertion object may be displayed at a position at which the tag operation block is located, namely, the position specified by the user.

In some instances, the second operation may be a tap operation performed by the user on a display interface by using a finger or a stylus.

In some examples, the second operation may alternatively be a movement operation performed by the user on the cursor by using a mouse or a keyboard.

In a possible implementation, the first application interface further includes a second option, and the method further includes: The first electronic device displays a second tag operation block in the first application interface in response to a received third operation performed on the second option, and the first electronic device sends a third invoking request to the second electronic device. The third invoking request is used to request to invoke a third target function of the second electronic device, the second tag operation block includes third tag information, and the third tag information is used to indicate that the first electronic device is invoking the third target function of the second electronic device. In a process in which the first electronic device invokes the third target function of the second electronic device, the first electronic device displays a second tag option box in response to a received tap operation performed on the second tag operation block. The second tag option box includes at least one second electronic device invoking option and at least one device option, the at least one device option is used to indicate at least one device that is capable of being invoked by the first electronic device, and the at least one device includes the first electronic device. In this way, the electronic device in this application may support invoking of one or more functions of the another electronic device, and may invoke a corresponding function according to a user requirement. In addition, the tag operation block may display corresponding prompt information, to prompt the user of a function that is being invoked currently.

In a possible implementation, the second tag option box further includes a temporary insertion option, the temporary insertion option is used to indicate to suspend invoking of the second electronic device, and the method further includes: The first electronic device updates the second tag information in response to a received tap operation performed on the temporary insertion option, and the first electronic device sends an invoking stop request to the second electronic device. The invoking stop request is used to indicate to stop invoking the second electronic device, and an updated second tag information is used to indicate that the second tag operation block is a temporarily inserted tag operation block. The first electronic device displays the second tag option box in response to the received tap operation performed on the second tag operation block. In this way, this application further provides a temporary tag insertion manner. In a scenario in which the user does not determine a specific object that needs to be inserted, a tag may be temporarily inserted for occupation, so that in a subsequent use process, the temporary tag is operated at any time to insert a corresponding insertion object.

In a possible implementation, the method further includes: The first electronic device displays a third tag option box in response to a received fourth operation performed on a first device option. The third tag option box includes at least one third electronic device invoking option and the at least one device option, and the at least one third electronic device invoking option is used to indicate at least one function that is in the third electronic device and that is capable of being invoked by the first electronic device. The first electronic device updates the third tag information to fourth tag information in response to a received fifth operation performed on a second invoking option, and the first electronic device sends a fourth invoking request to the third electronic device. The fourth invoking request is used to request to invoke a fourth target function of the third electronic device, the fourth tag information is used to indicate that the first electronic device is invoking the fourth target function of the third electronic device, and the second invoking option belongs to the at least one third electronic device invoking option. The first electronic device receives a second insertion object sent by the third electronic device. The second insertion object is obtained by the third electronic device based on the fourth target function. The first electronic device replaces the second tag operation block with the second insertion object. In this way, the user may operate the tag operation block at any time in a use process, to select a specified option in a tag option box, so that the electronic device can invoke a specified function of another invocable electronic device. Therefore, a dynamic invoking method is provided, to change an invoked object and a corresponding function at any time according to different scenarios and different requirements.

In a possible implementation, the at least one function that is in the third electronic device and that is capable of being invoked by the first electronic device is completely or partially different from the at least one function that is in the second electronic device and that is capable of being invoked by the first electronic device. For example, the second electronic device may provide functions such as document scanning and photographing, the third electronic device may provide functions such as photographing and a handwriting board, and different electronic devices may provide a same function or different functions.

In a possible implementation, the third electronic device is the first electronic device. In this way, the invoking method in this application may also be applied to invoking of a specified function of this device.

In a possible implementation, the first interface further includes a third option, and the method further includes: The first electronic device displays a third tag operation block in the first application interface in response to a received fifth operation performed on the third option. The third tag operation block includes third tag information, and the third tag information is used to indicate that the third tag operation block is a temporarily inserted tag operation block. In this way, this application further provides a temporary tag insertion manner. In a scenario in which the user does not determine a specific object that needs to be inserted, a tag may be temporarily inserted for occupation, so that in a subsequent use process, the temporary tag is operated at any time to insert a corresponding insertion object.

In a possible implementation, after the first electronic device displays the first tag operation block in the first application interface in response to the first operation, the method further includes: The first electronic device receives a drag operation performed on the first tag operation block; and the first electronic device moves the first tag operation block from a current position to another position with the drag operation. That the first electronic device replaces the first tag operation block with the first insertion object includes: The first electronic device cancels display of the first tag operation block; and the first electronic device inserts the first insertion object at the another position. In this way, the user may drag the tag operation block at any time according to a requirement, to change an insertion position of the tag operation block. Correspondingly, an insertion position of a subsequent insertion object also changes with the user requirement.

In a possible implementation, after the first electronic device displays the first tag operation block in the first application interface in response to the first operation, the method further includes: The first electronic device updates the input content in response to a received sixth operation in the process in which the first electronic device invokes the first target function of the second electronic device. In this way, according to the invoking method in this application, in an implementation process, that is, in a process in which the electronic device is invoking another electronic device, the user may change entered content, namely, the content in an interface, at any time according to a requirement. Certainly, in another embodiment, the user may further perform another operation on the interface. In other words, in the process in which the electronic device is invoking the another electronic device, an interface of an application is not locked and may be changed at any time.

According to a second aspect, this application provides an electronic device. The electronic device includes: one or more processors and a memory; and one or more computer programs. The one or more computer programs are stored in the memory, and when the computer programs are executed by the one or more processors, the electronic device is enabled to perform the following steps: displaying a first application interface, where input content and a first option are displayed in the first application interface; receiving a first operation performed on the first option; displaying a first tag operation block in the first application interface in response to the first operation, and sending a first invoking request to a second electronic device, where the first invoking request is used to request to invoke a first target function of the second electronic device, the first tag operation block includes first tag information, and the first tag information is used to indicate that the electronic device is invoking the first target function of the second electronic device; in a process of invoking the first target function of the second electronic device, displaying a first tag option box in response to a received tap operation performed on the first tag operation block, where the first tag option box includes at least one second electronic device invoking option, and the at least one second electronic device invoking option corresponds to at least one function that is in the second electronic device and that is capable of being invoked by the electronic device; updating the first tag information to second tag information in response to a received tap operation performed on a first invoking option, and sending a second invoking request to the second electronic device, where the second invoking request is used to request to invoke a second target function of the second electronic device, the second tag information is used to indicate that the electronic device is invoking the second target function of the second electronic device, and the first invoking option belongs to the at least one second electronic device invoking option; receiving a first insertion object sent by the second electronic device, where the first insertion object is obtained by the second electronic device based on the second target function; and replacing the first tag operation block with the first insertion object.

In a possible implementation, when the computer programs are executed by the one or more processors, the electronic device is enabled to perform the following steps: canceling display of the first tag operation block; and inserting the first insertion object at an original display position of the first tag operation block.

In a possible implementation, the first tag operation block is displayed at an end of the input content.

In a possible implementation, the first tag operation block is displayed at a position corresponding to a last editing operation performed on the input content.

In a possible implementation, before the receiving, by the electronic device, a first operation performed on the first option in the first application interface, when the computer programs are executed by the one or more processors, the electronic device is enabled to perform the following steps: displaying a cursor at a first position in response to a received second operation performed at the first position; and the displaying a first tag operation block at a first position in the first application interface includes: inserting the first tag operation block at a position at which the cursor is located.

In a possible implementation, the first application interface further includes a second option, and when the computer programs are executed by the one or more processors, the electronic device is enabled to perform the following steps: displaying a second tag operation block in the first application interface in response to a received third operation performed on the second option, and sending a third invoking request to the second electronic device, where the third invoking request is used to request to invoke a third target function of the second electronic device, the second tag operation block includes third tag information, and the third tag information is used to indicate that the electronic device is invoking the third target function of the second electronic device; and in a process of invoking the third target function of the second electronic device, displaying a second tag option box in response to a received tap operation performed on the second tag operation block, where the second tag option box includes at least one second electronic device invoking option and at least one device option, the at least one device option is used to indicate at least one device that is capable of being invoked by the electronic device, and the at least one device includes the electronic device.

In a possible implementation, the second tag option box further includes a temporary insertion option, the temporary insertion option is used to indicate to suspend invoking of the second electronic device, and when the computer programs are executed by the one or more processors, the electronic device is enabled to perform the following steps: updating the second tag information in response to a received tap operation performed on the temporary insertion option, and sending an invoking stop request to the second electronic device, where the invoking stop request is used to indicate to stop invoking the second electronic device, and an updated second tag information is used to indicate that the second tag operation block is a temporarily inserted tag operation block; and displaying the second tag option box in response to the received tap operation performed on the second tag operation block.

In a possible implementation, when the computer programs are executed by the one or more processors, the electronic device is enabled to perform the following steps: displaying a third tag option box in response to a received fourth operation performed on a first device option, where the third tag option box includes at least one third electronic device invoking option and the at least one device option, and the at least one third electronic device invoking option is used to indicate at least one function that is in the third electronic device and that is capable of being invoked by the electronic device; updating the third tag information to fourth tag information in response to a received fifth operation performed on a second invoking option, and sending a fourth invoking request to the third electronic device, where the fourth invoking request is used to request to invoke a fourth target function of the third electronic device, the fourth tag information is used to indicate that the electronic device is invoking the fourth target function of the third electronic device, and the second invoking option belongs to the at least one third electronic device invoking option; receiving a second insertion object sent by the third electronic device, where the second insertion object is obtained by the third electronic device based on the fourth target function; and replacing the second tag operation block with the second insertion object.

In a possible implementation, the at least one function that is in the third electronic device and that is capable of being invoked by the electronic device is completely or partially different from the at least one function that is in the second electronic device and that is capable of being invoked by the electronic device.

In a possible implementation, the third electronic device is the electronic device.

In a possible implementation, the first interface further includes a third option, and when the computer programs are executed by the one or more processors, the electronic device is enabled to perform the following step: displaying a third tag operation block in the first application interface in response to a received fifth operation performed on the third option. The third tag operation block includes third tag information, and the third tag information is used to indicate that the third tag operation block is a temporarily inserted tag operation block.

In a possible implementation, after the displaying, by the first electronic device, a first tag operation block in the first application interface in response to the first operation, when the computer programs are executed by the one or more processors, the electronic device is enabled to perform the following steps: receiving a drag operation performed on the first tag operation block; moving the first tag operation block from a current position to another position with the drag operation; canceling display of the first tag operation block; and inserting the first insertion object at the another position.

In a possible implementation, after the displaying, by the first electronic device, a first tag operation block in the first application interface in response to the first operation, when the computer programs are executed by the one or more processors, the electronic device is enabled to perform the following steps: updating the input content in response to a received sixth operation in the process of invoking the first target function of the second electronic device.

The second aspect and any implementation of the second aspect respectively correspond to the first aspect and any implementation of the first aspect. For technical effects corresponding to the second aspect and the any implementation of the second aspect, refer to technical effects corresponding to the first aspect and the any implementation of the first aspect. Details are not described herein again.

According to a third aspect, this application provides a communication system. The system includes:
a first electronic device, configured to:
display a first application interface, where input content and a first option are displayed in the first application interface;
receive a first operation performed on the first option; and
display a first tag operation block in the first application interface in response to the first operation, and send a first invoking request to a second electronic device, where the first invoking request is used to request to invoke a first target function of the second electronic device, the first tag operation block includes first tag information, and the first tag information is used to indicate that the electronic device is invoking the first target function of the second electronic device.

The second electronic device is configured to:
receive a first invoking request; and
start a first target function based on the first invoking request, and display a second application interface corresponding to the first target function, where the second application interface includes at least one to-be-inserted object obtained by the second electronic device by invoking the first target function.

The first electronic device is further configured to:
in a process of invoking the first target function of the second electronic device, display a first tag option box in response to a received tap operation performed on the first tag operation block, where the first tag option box includes at least one second electronic device invoking option, and the at least one second electronic device invoking option corresponds to at least one function that is in the second electronic device and that is capable of being invoked by the electronic device; and
update the first tag information to second tag information in response to a received tap operation performed on a first invoking option, and send a second invoking request to the second electronic device, where the second invoking request is used to request to invoke a second target function of the second electronic device, the second tag information is used to indicate that the electronic device is invoking the second target function of the second electronic device, and the first invoking option belongs to the at least one second electronic device invoking option.

The second electronic device is further configured to:
receive the second invoking request;
stop invoking the first target function based on the second invoking request, start the second target function, and display a third application interface corresponding to the second target function, where the third application interface includes at least one to-be-inserted object obtained by the second electronic device by invoking the second target function; and
send a first insertion object to the first electronic device in response to a received confirmation operation.

The first electronic device is further configured to:
receive the first insertion object sent by the second electronic device; and
replace the first tag operation block with the first insertion object.

In a possible implementation, the first electronic device is specifically configured to:
cancel display of the first tag operation block; and
insert the first insertion object at an original display position of the first tag operation block.

In a possible implementation, the first tag operation block is displayed at an end of the input content.

In a possible implementation, the first tag operation block is displayed at a position corresponding to a last editing operation performed on the input content.

In a possible implementation, the first electronic device is further configured to:
display a cursor at a first position in response to a received second operation performed at the first position; and that the first tag operation block is displayed at the first position in the first application interface includes: inserting the first tag operation block at a position at which the cursor is located.

In a possible implementation, the first application interface further includes a second option, and the first electronic device is further configured to:
display a second tag operation block in the first application interface in response to a received third operation performed on the second option, and send a third invoking request to the second electronic device, where the third invoking request is used to request to invoke a third target function of the second electronic device, the second tag operation block includes third tag information, and the third tag information is used to indicate that the electronic device is invoking the third target function of the second electronic device.

The second electronic device is configured to:
receive the third invoking request; and
start the third target function based on the third invoking request, and display a third application interface corresponding to the third target function, where the third application interface includes at least one to-be-inserted object obtained by the second electronic device by invoking the third target function.

The first electronic device is further configured to:
in a process of invoking the third target function of the second electronic device, display a second tag option box in response to a received tap operation performed on the second tag operation block, where the second tag option box includes at least one second electronic device invoking option and at least one device option, the at least one device option is used to indicate at least one device that is capable of being invoked by the electronic device, and the at least one device includes the electronic device.

In a possible implementation, the second tag option box further includes a temporary insertion option, the temporary insertion option is used to indicate to suspend invoking of the second electronic device, and the first electronic device is further configured to:
update the second tag information in response to a received tap operation performed on the temporary insertion option, and send an invoking stop request to the second electronic device, where the invoking stop request is used to indicate to stop invoking the second electronic device, and an updated second tag information is used to indicate that the second tag operation block is a temporarily inserted tag operation block.

The second electronic device is further configured to:
receive the invoking stop request;
stop invoking the third target function based on the invoking stop request; and
display a home screen or a most recently displayed application interface.

The first electronic device is further configured to:
display the second tag option box in response to the received tap operation performed on the second tag operation block.

In a possible implementation, the first electronic device is further configured to:
display a third tag option box in response to a received fourth operation performed on a first device option, where the third tag option box includes at least one third electronic device invoking option and the at least one device option, and the at least one third electronic device invoking option is used to indicate at least one function that is in a third electronic device and that is capable of being invoked by the electronic device; update the third tag information to fourth tag information in response to a received fifth operation performed on a second invoking option, and send a fourth invoking request to the third electronic device, where the fourth invoking request is used to request to invoke a fourth target function of the third electronic device, the fourth tag information is used to indicate that the electronic device is invoking the fourth target function of the third electronic device, and the second invoking option belongs to the at least one third electronic device invoking option.

The third electronic device is configured to:
receive the fourth invoking request;
start the fourth target function based on the fourth invoking request, and display a fourth application interface corresponding to the fourth target function, where the fourth application interface includes at least one to-be-inserted object obtained by the third electronic device by invoking the fourth target function; and
send a second insertion object to the first electronic device in response to a received confirmation operation.

The first electronic device is further configured to:
receive the second insertion object sent by the third electronic device; and
replace the second tag operation block with the second insertion object.

In a possible implementation, the at least one function that is in the third electronic device and that is capable of being invoked by the electronic device is completely or partially different from the at least one function that is in the second electronic device and that is capable of being invoked by the electronic device.

In a possible implementation, the third electronic device is the first electronic device.

In a possible implementation, the first interface further includes a third option, and the first electronic device is further configured to:
display a third tag operation block in the first application interface in response to a received fifth operation performed on the third option, where the third tag operation block includes the third tag information, and the third tag information is used to indicate that the third tag operation block is a temporarily inserted tag operation block.

In a possible implementation, the first electronic device is further configured to:
receive a drag operation performed on the first tag operation block; move the first tag operation block from a current position to another position with the drag operation; cancel display of the first tag operation block; and insert the first insertion object at the another position.

In a possible implementation, the first electronic device is further configured to:
update the input content in response to a received sixth operation in the process of invoking the first target function of the second electronic device.

The third aspect and any implementation of the third aspect respectively correspond to the first aspect and any implementation of the first aspect. For technical effects corresponding to the third aspect and the any implementation of the third aspect, refer to technical effects corresponding to the first aspect and the any implementation of the first aspect. Details are not described herein again.

According to a fourth aspect, an embodiment of this application provides a computerreadable medium, configured to store a computer program. The computer program includes instructions for performing the method in the first aspect or any possible implementation of the first aspect.

According to a fifth aspect, an embodiment of this application provides a computer program. The computer program includes instructions for performing the method in the first aspect or any possible implementation of the first aspect.

According to a sixth aspect, an embodiment of this application provides a chip. The chip includes a processing circuit and a transceiver pin. The transceiver pin and the processing circuit communicate with each other through an internal connection channel. The processing circuit performs the method in the first aspect or any possible implementation of the first aspect, to control a receive pin to receive a signal, and to control a transmit pin to send a signal.

### BRIEF DESCRIPTION OF DRAWINGS

FIG. 1 is an example schematic diagram of a hardware structure of an electronic device;
FIG. 2 is an example schematic diagram of a structure of a camera of an electronic device;
FIG. 3 is an example schematic diagram of a software structure of an electronic device;
FIG. 4A to FIG. 4C are an example schematic diagram of a user interface;
FIG. 5 is an example schematic flowchart of establishing a communication connection by an electronic device;
FIG. 6 is an example schematic flowchart of establishing a communication connection by an electronic device;
FIG. 7A(1)~FIG. 7C(2) are example schematic diagrams of user interfaces;
FIG. 8A(1)~FIG. 8C(2) are example schematic diagrams of user interfaces;
FIG. 9A(1)~FIG. 9D(2) are example schematic diagrams of user interfaces;
FIG. 10A and FIG. 10B are example schematic diagrams of user interfaces;
FIG. 11A(1)~FIG. 11B(2) are example schematic diagrams of user interfaces;
FIG. 12A(1)~FIG. 12C(2) are example schematic diagrams of user interfaces;
FIG. 13A(1)~FIG. 13C(2) are example schematic diagrams of user interfaces;
FIG. 14A(1)~FIG. 14E(2) are example schematic diagrams of user interfaces;
FIG. 15A(1) and FIG. 15A(2) are an example schematic diagram of a scenario in which a tablet invokes a photographing function of a mobile phone;
FIG. 15B(1) and FIG. 15B(2) are an example schematic diagram of a scenario in which a notebook invokes a photographing function of a mobile phone; and
FIG. 16 is an example schematic diagram of a structure of an apparatus.

### DESCRIPTION OF EMBODIMENTS

The following clearly and completely describes technical solutions in embodiments of this application with reference to the accompanying drawings in embodiments of this application.

In this specification, the term "and/or" is merely an association relationship for describing associated objects, and indicates that three relationships may exist. For example, A and/or B may indicate the following three cases: Only A exists, both A and B exist, and only B exists.

The terms "first", "second", and the like in the specification and claims of the embodiments of this application are used to distinguish between different objects, and are not used to describe a particular order of the objects. For example, a first target object, a second target object, and the like are used to distinguish between different target objects, and are not used to describe a particular order of target objects.

In the embodiments of this application, words such as "example" or "for example" are used to indicate an example, illustration, or description. Any embodiment or design solution described as "example" or "for example" in the embodiments of this application should not be explained as being preferred or advantageous over other embodiments or design solutions. Exactly, use of the words such as "example" or "for example" is intended to present related concepts in a specific manner.

In the descriptions of the embodiments of this application, unless otherwise stated, "a plurality of" means two or more. For example, a plurality of processing units mean two or more processing units, and a plurality of systems mean two or more systems.

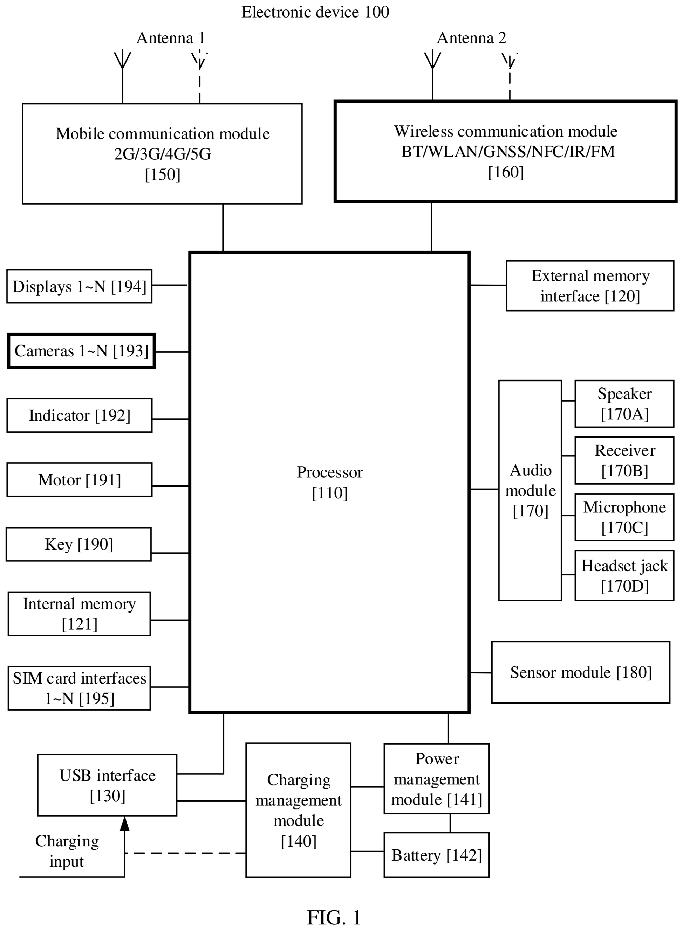

FIG. 1 is a schematic diagram of a structure of an electronic device 100. It should be understood that the electronic device 100 shown in FIG. 1 is merely an example of the electronic device, and the electronic device 100 may have more or fewer components than those shown in the figure, may combine two or more components, or may have different component configurations. The various components shown in FIG. 1 may be implemented in hardware that includes one or more signal processing and/or application-specific integrated circuits, software, or a combination of hardware and software. For example, the electronic device 100 shown in FIG. 1 may be an electronic device such as a mobile phone, a tablet, a wearable device, a computer, a vehicle-mounted device, or a smart home device. This is not limited in this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identification module (subscriber identification module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices or may be integrated into one or more processors.

A memory may be further disposed in the processor 110 to store instructions and data. In some embodiments, the memory in the processor 110 is a cache memory. The memory may store instructions or data recently used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

A wireless communication function of the electronic device 100 may be implemented by using the antenna 1, the antenna 2, the mobile communication module 150, the wireless communication module 160, the modem processor, a baseband processor, and the like.

The antenna 1 and the antenna 2 are configured to transmit or receive an electromagnetic wave signal. Each antenna in the electronic device 100 may be configured to cover one or more communication frequency bands. Different antennas may also be multiplexed to increase antenna utilization. For example, the antenna 1 may be multiplexed into a diversity antenna of a wireless local area network. In some other embodiments, the antenna may be used together with a tuning switch.

The mobile communication module 150 may provide a solution for wireless communication that is applied to the electronic device 100 and that includes 2G/3G/4G/5G and the like. The mobile communication module 150 may include at least one filter, a switch, a power amplifier, a low noise amplifier (LNA), and the like. The mobile communication module 150 may receive an electromagnetic wave through the antenna 1, perform processing such as filtering or amplification on the received electromagnetic wave, and transfer a processed electromagnetic wave to the modem processor for demodulation. The mobile communication module 150 may further amplify a signal obtained after modulation by the modem processor, and convert, through the antenna 1, an amplified signal into an electromagnetic wave for radiation. In some embodiments, at least some functional modules in the mobile communication module 150 may be disposed in the processor 110. In some embodiments, at least some functional modules in the mobile communication module 150 may be disposed in a same component as at least some modules in the processor 110.

The wireless communication module 160 may provide a solution for wireless communication that is applied to the electronic device 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the to-be-sent signal, and convert, through the antenna 2, the to-be-sent signal into an electromagnetic wave for radiation.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology.

The electronic device 100 may implement a display function through the GPU, the display 194, the application processor, and the like. The GPU is a microprocessor for image processing, and is connected to the display 194 and the application processor. The GPU is configured to perform mathematical and geometric computing for graphics rendering. The processor 110 may include one or more GPUs that execute program instructions to generate or change display information.

The display 194 is configured to display an image, a video, and the like. The display 194 includes a display panel. In some embodiments, the electronic device 100 may include one or N displays 194, where N is a positive integer greater than 1.

The electronic device 100 may implement a photographing function by using the ISP, the camera 193, the video codec, the GPU, the display 194, the application processor, and the like.

The camera 193 is configured to capture a still image or a video. In some embodiments, the electronic device 100 may include one or N camera lenses 193, where N is a positive integer greater than 1.

For example, the camera 193 may be located in an edge area of the electronic device, may be an in-screen camera, or may be an elevating camera. The camera 193 may include a rear-facing camera, and may further include a front-facing camera. A specific position and form of the camera 193 are not limited in this embodiment of this application. The electronic device 100 may include cameras with one or more focal lengths. For example, cameras with different focal lengths may include a long-focus camera, a wide-angle camera, an ultra wide camera, or a panoramic camera.

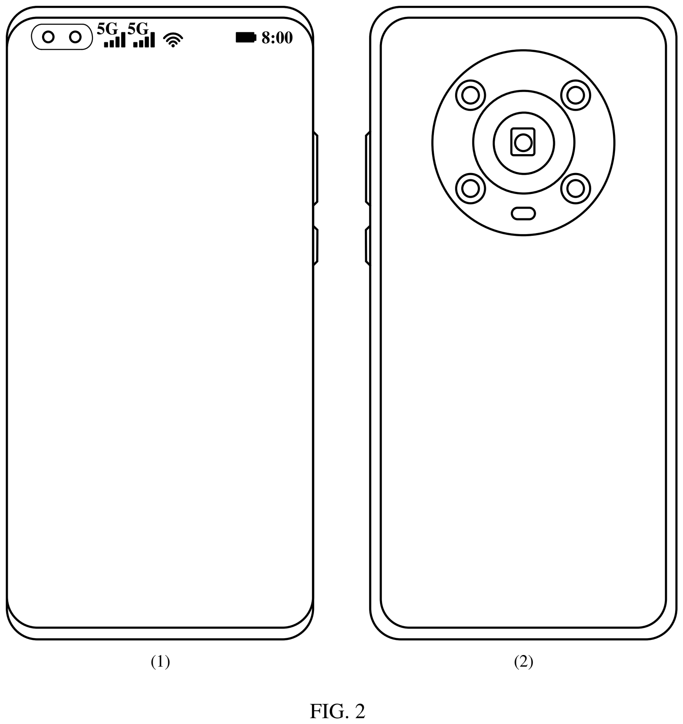

FIG. 2 is a schematic diagram of a position of a camera 193 in a mobile phone when the electronic device 100 is the mobile phone. As shown in (1) in FIG. 2, for example, a front-facing camera is disposed on an upper part (near a top edge area) of a display of the mobile phone. There may be one or more front-facing cameras. In this embodiment of this application, the mobile phone includes two front-facing cameras. It should be noted that a camera layout manner (for example, horizontal arrangement and spaced arrangement) shown in (1) in FIG. 2 is merely an example. This is not limited in this application. As shown in (2) in FIG. 2, for example, one or more rear-facing cameras are disposed on the back (namely, a side opposite to the display) of the mobile phone. For example, the rear-facing camera of the mobile phone in (2) in FIG. 2 includes five cameras, and the five cameras may be considered as a rear-facing camera module, or may be considered as five separate cameras. The five cameras may include but are not limited to a wide-angle camera, an ultra wide camera, a panoramic camera, and the like. This is not limited in this application.

The internal memory 121 may be configured to store computer-executable program code, and the executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required by at least one function (for example, a sound playing function or an image playing function), and the like. The data storage area may store data (such as audio data and a phone book) and the like created in a use process of the electronic device 100. In addition, the internal memory 121 may include a high-speed random access memory, and may further include a non-volatile memory, for example, at least one magnetic disk storage device, a flash memory device, or a universal flash storage (universal flash storage, UFS).

The electronic device 100 may implement audio functions, for example, music playing and recording, by using the audio module 170, the speaker 170A, the receiver 170B, the microphone 170C, the headset jack 170D, the application processor, and the like.

A software system of the electronic device 100 may use a layered architecture, an event-driven architecture, a microkernel architecture, a microservice architecture, or a cloud architecture. In the embodiments of this application, an Android system with a layered architecture is used as an example to describe the software structure of the electronic device 100.

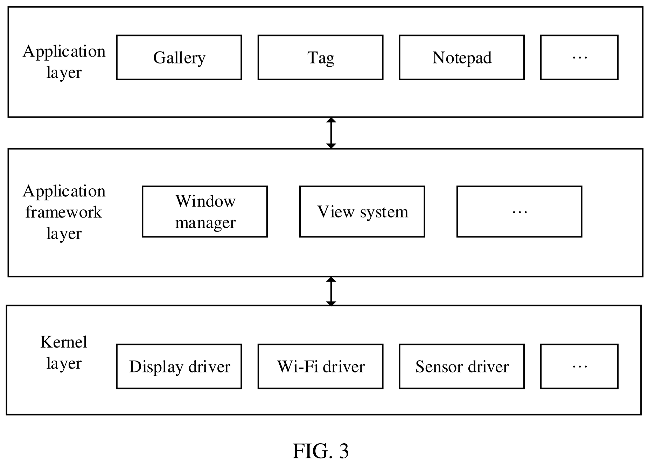

FIG. 3 is a block diagram of a software structure of the electronic device 100 according to an embodiment of this application.

In the layered architecture of the electronic device 100, software is divided into several layers, and each layer has a clear role and task. The layers communicate with each other through software interfaces. In some embodiments, the Android system includes but is not limited to an application layer, an application framework layer, a kernel layer, and the like from top to bottom.

The application layer may include a series of application packages.

As shown in FIG. 3, the application packages may include applications such as Camera, Gallery, Calendar, Phone, Map, Navigation, WLAN, Bluetooth, Music, Video, Messages, Tag, and Notepad. In this embodiment of this application, Notepad is used as an example for description. In another embodiment, an invoking method in the embodiments of this application may be further applied to any application that provides a note (including but not limited to a character note, an audio note, and the like) function. Optionally, the invoking method in the embodiments of this application may be further applied to another type of application software, for example, drawing or a mind map. This is not limited in this application.

In this embodiment of this application, Notepad (or another third-party note application) may invoke the Tag application, to implement the invoking method in the embodiments of this application.

The application framework layer provides an application programming interface (application programming interface, API) and a programming framework for an application at the application layer. The application framework layer includes some predefined functions.

As shown in FIG. 3, the application framework layer may include a window manager, a content provider, a view system, a phone manager, a resource manager, a notification manager, and the like.

The kernel layer is a layer between hardware and software. The kernel layer includes at least a display driver, a camera driver, an audio driver, a sensor driver, a Wi-Fi driver, and the like.

It may be understood that the layers in the software structure shown in FIG. 3 and components included at the layers do not constitute a specific limitation on the electronic device 100. In some other embodiments of this application, the electronic device 100 may include more or fewer layers than those shown in the figure, and each layer may include more or fewer components. This is not limited in this application.

FIG. 4A to FIG. 4C are an example schematic diagram of a user interface. In an embodiment of this application, an example in which a user uses a Notepad application is used for description. In another embodiment, an invoking method in the embodiments of this application may also be applied to another application, for example, an office application or other third-party application software that can provide an editing function. An implementation therefor is the same as that for the Notepad application provided in this embodiment of this application. Examples are not given one by one in this application for description. Certainly, in some instances, the invoking method in the embodiments of this application may be further applied to non-note application software, for example, may be applied to drawing software. This is not limited in this application.

As shown in FIG. 4A, a Notepad application display interface 401 includes but is not limited to a note content display window, an option control 402, and the like. The note content display window may be configured to display note content, and the note content includes but is not limited to character content, image content, voice content, and the like. This is not limited in this application.

For example, the option control 402 includes a plurality of option controls, including but not limited to controls such as a "List" option, a "Style" option, an "Add" option 4021, a "Record" option, and a "Handwriting" option. A quantity and layouts of option controls 402 in the Notepad application display interface 401 are merely examples. In another embodiment, the option control 402 may include more or fewer option controls. This is not limited in this application.

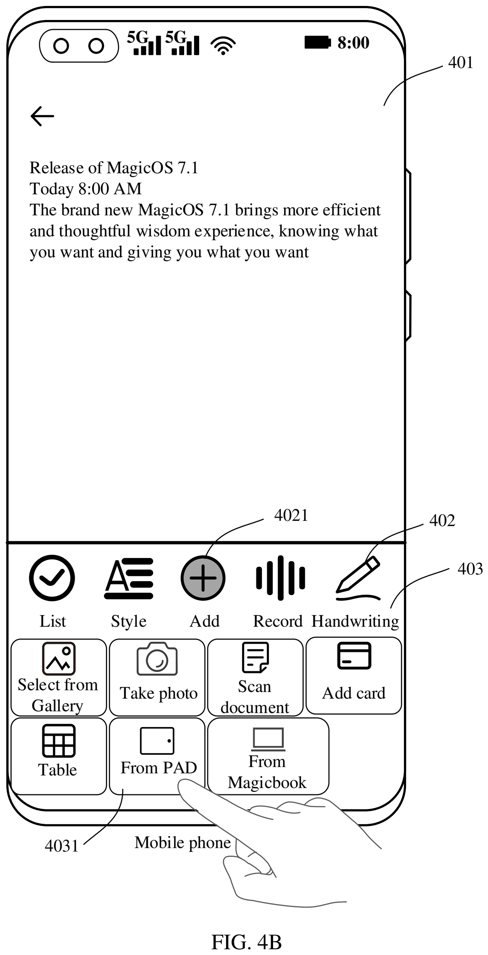

Still as shown in FIG. 4A, the user taps the "Add" option 4021. A mobile phone (specifically, the Notepad application) invokes a Tag application in response to a received user operation (an execution body in the following descriptions is the mobile phone, and actually may be the Tag application. No repeated descriptions are provided below), and displays an option display area 403. As shown in FIG. 4B, the mobile phone displays a next-level options of the "Add" control in the option display area 403, including but not limited to a "Select from Gallery" option, a "Take photo" option, a "Scan document" option, an "Add card" option, a "Table" option, a "From PAD" option 4022, a "From Magicbook" option, and the like.

The "Select from Gallery" option is used to indicate to select an image from Gallery on this device and insert the image into a current note.

The "Take photo" option is used to indicate to invoke a camera of this device to take a photo and insert the photo into the current note.

The "Scan document" option is used to indicate to invoke the camera of this device to scan a document and insert a scanning result into the current note. The scanning result may be a result obtained after an image (specifically a character in the image) is converted into a text.

The "Add card" option is used to indicate to invoke the camera of this device to scan a card and insert a scanning result into the current note.

The "Table" option is used to indicate to insert a table.

The "From PAD" option 4031 and the "From Magicbook" option are used to indicate to invoke another electronic device (for example, a tablet or a notebook).

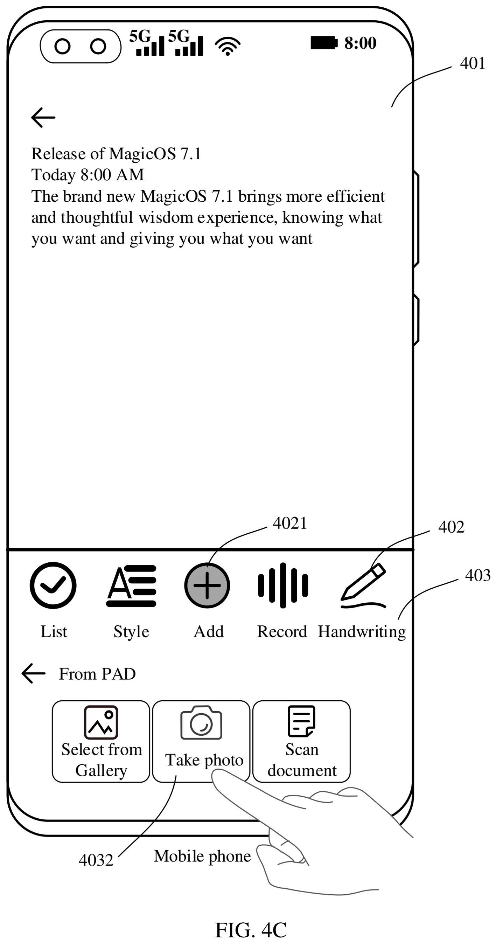

As shown in FIG. 4B, it is assumed that in this instance, the user needs to use a nearby tablet to take a photo. The user may tap the "From PAD" option 4031. As shown in FIG. 4C, the mobile phone displays a next-level option of the "From PAD" option 4031 in the option display area 403 in response to a received user operation, including but not limited to the "Select from Gallery" option, the "Take photo" option 4032, the "Scan document" option, and the like.

The "Select from Gallery" option is used to indicate to select an image from Gallery on another electronic device (for example, the tablet) and insert the image into a current note.

The "Take photo" option 4032 is used to indicate to invoke a camera of the tablet to take a photo and insert the photo into the current note.

The "Scan document" option is used to indicate to invoke the camera of the tablet to scan a document and insert a scanning result into the current note. The scanning result may be a result obtained after an image (specifically a character in the image) is converted into a text.

In this embodiment of this application, the "Select from Gallery" option, the "Take photo" option, and the "Scan document" option are only used as examples for description. In another embodiment, more options may be further set according to an actual requirement. For example, a "Voice" option may be set to invoke a microphone of this device or another electronic device and insert audio collected by the microphone into the current note. For an implementation therefor, refer to the invoking method in the embodiments of this application. Examples are not given one by one in this application for description.

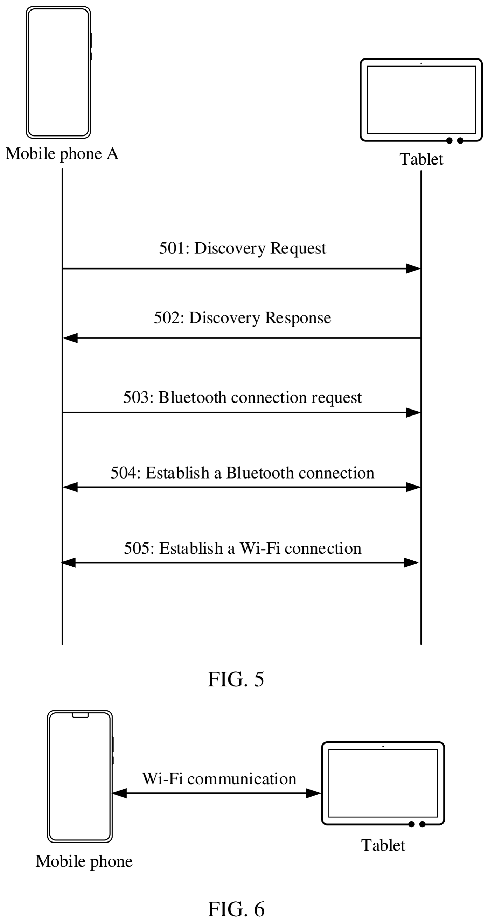

FIG. 4A to FIG. 4C show operations interface of a user. With reference to FIG. 5 and FIG. 6, the following describes communication interaction between a mobile phone and a tablet (namely, PAD) in response to a received user operation. Specifically, FIG. 5 is an example schematic flowchart of establishing a communication connection by an electronic device. As shown in FIG. 5, the procedure includes but is not limited to the following steps.

S501: The mobile phone sends a Discovery Request (probe request) message to the tablet.

For example, the mobile phone (which may be specifically a Tag application) registers with a Nearby (proximity discovery) service in response to a received operation of tapping an "Add" option 4021 by a user. That the application registers with the Nearby service may be understood as that, in a process of using the application, the application expects the Nearby service to provide a corresponding service for the application. For example, as described above, a WLAN function and a Bluetooth function need to be enabled for use of the Tag application, which may also be understood that a service capability supported by the Tag application includes the WLAN function and the Bluetooth function. The Tag application may register with the Nearby service, and request to invoke the WLAN function and the Bluetooth function during use of the Tag application.

For example, the Nearby service performs a scanning phase. Optionally, the Nearby service may invoke an underlying module or a chip. For example, the Nearby service may invoke a D2D service, so that the D2D service initiates a Bluetooth connection establishment process. Optionally, the D2D service may further invoke a D2D driver, so that the D2D driver controls a Bluetooth chip to broadcast the Discovery Request message in real time or periodically.

It should be noted that in this embodiment of this application, Bluetooth communication between devices, for example, Bluetooth communication between the tablet and the mobile phone may be maintained by using Bluetooth low energy (Bluetooth Low Energy, BLE), or may be maintained by using classical Bluetooth. This is not limited in this application.

For example, the Discovery Request message carries device information of the mobile phone. Optionally, the device information includes but is not limited to identification information (for example, a device name, a device model, or Bluetooth address information) of the mobile phone, and the like. This is not limited in this application.

S502: The tablet sends a Discovery Response (probe response) message to the mobile phone.

For example, all devices whose Bluetooth function is enabled near the mobile phone may receive the Discovery Request message sent by the mobile phone. In this embodiment of this application, a Tag application is installed in an electronic device that receives Discovery Request sent by the mobile phone, and an electronic device that has a same user account (for example, an Honor account) with the mobile phone may send a Discovery Response message to the mobile phone based on a Bluetooth protocol and the Bluetooth address information that is of the mobile phone and that is obtained from the Discovery Request message, to indicate to establish a Bluetooth connection to the mobile phone.

For example, there are a plurality of devices near the mobile phone, including a tablet (PAD), a notebook (Magicbook), and a smart band. All of the tablet, the notebook, and the smart band may receive Discovery Request sent by the mobile phone. The tablet and the notebook are installed with the Tag application, and have registered with the Nearby service in advance. Correspondingly, the tablet and the notebook obtain the Bluetooth address information of the mobile phone from the Discovery Request message, and send a Discovery Response message to the mobile phone, to indicate to establish a Bluetooth connection to the mobile phone. The smart band is not installed with the Tag application, and does not return a Discovery Response message to the mobile phone even if the smart band receives the Discovery Request message. It may be understood that the smart band does not respond to probing of the Tag application on a mobile phone side.

Optionally, a Discovery Response message sent by the tablet carries device information of the tablet, and the device information includes but is not limited to Bluetooth address information of the tablet, identification information (for example, a device name and a device model) of the tablet, and the like. This is not limited in this application.

It should be noted that FIG. 5 is merely described by using interaction between the mobile phone and the tablet. In an actual use scenario, more devices may be included. For example, in this embodiment of this application, the notebook near the mobile phone also returns a Discovery Response message to the mobile phone.

After receiving the Discovery Response messages returned by the tablet and the notebook, the mobile phone may obtain information such as device names from the Discovery Response message. The tablet is used as an example, and a device name that is of the tablet and that is obtained by the mobile phone is "PAD". As shown in FIG. 4B, the mobile phone displays a "From PAD" option in an option display area 403. The option may be understood as that the Tag application finds PAD near the mobile phone by using Bluetooth (or another wireless transmission module) of the mobile phone, and PAD may be invoked. In this embodiment of this application, that a device is invoked by another device means that the device has a wireless transmission function, has a same account as the another device, and is provided with the Tag application.

S503: The mobile phone sends a Bluetooth connection request message to the tablet.

For example, as shown in FIG. 4B, when receiving "the user taps the "From PAD" option", the mobile phone may determine that a wireless connection needs to be established to PAD, to exchange data. Correspondingly, the mobile phone may send the Bluetooth connection request message to the tablet based on the Bluetooth address information that is of the tablet and that is carried in the Discovery Response message, to indicate to establish a Bluetooth connection to tablet. Optionally, the connection request message carries information such as the Bluetooth address information of the tablet and the Bluetooth address information of the tablet. This is not limited in this application.

S504: The tablet establishes a Bluetooth connection to the mobile phone.

For example, after receiving the Bluetooth connection request message sent by the mobile phone, the tablet establishes the Bluetooth connection to the mobile phone.

It should be noted that in S504, the mobile phone and the tablet may exchange Bluetooth signaling for a plurality of times to transmit information required for establishing the Bluetooth connection. For a specific interaction process, refer to content in the Bluetooth protocol. Repeated descriptions are not provided in this application.

S505: The mobile phone and the tablet establish a Wi-Fi connection.

For example, after the mobile phone and the tablet establish the Bluetooth connection, the mobile phone and the tablet may exchange data based on the Bluetooth connection. For example, in this embodiment of this application, the mobile phone and the tablet may exchange Wi-Fi connection establishment information through the Bluetooth connection. Correspondingly, the mobile phone and the tablet may establish the Wi-Fi connection to the peer end based on the obtained Wi-Fi connection establishment information. For a manner of establishing the Wi-Fi connection, refer to conventional-technology embodiments. This is not limited in this application.

For example, as shown in FIG. 6, the mobile phone and the tablet establish the Wi-Fi connection, and exchange data based on the Wi-Fi connection. Optionally, in this embodiment of this application, the Tag application on the tablet may send, to the mobile phone through the Wi-Fi connection, a Tag function that may be provided by the tablet, for example, including but not limited to a Gallery function, a photographing function, and a document scanning function. Correspondingly, the mobile phone learns that PAD may provide the Gallery function, the photographing function, and the document scanning function, which may be understood as that the mobile phone may invoke the Gallery function, the photographing function, and the document scanning function of PAD. As shown in FIG. 4C, the mobile phone may display option controls corresponding to the invocable functions in the option display area 403, for example, including but not limited to a "Select from Gallery" option, a "Take photo" option, and a "Scan document" option.

Still as shown in FIG. 4C, in this instance, an example in which in a process in which the user records a note by using the mobile phone, the photographing function of the tablet is invoked to perform photographing is used for description. For example, the user taps the "Take photo" option, to indicate to invoke the photographing function of the tablet to perform photographing.

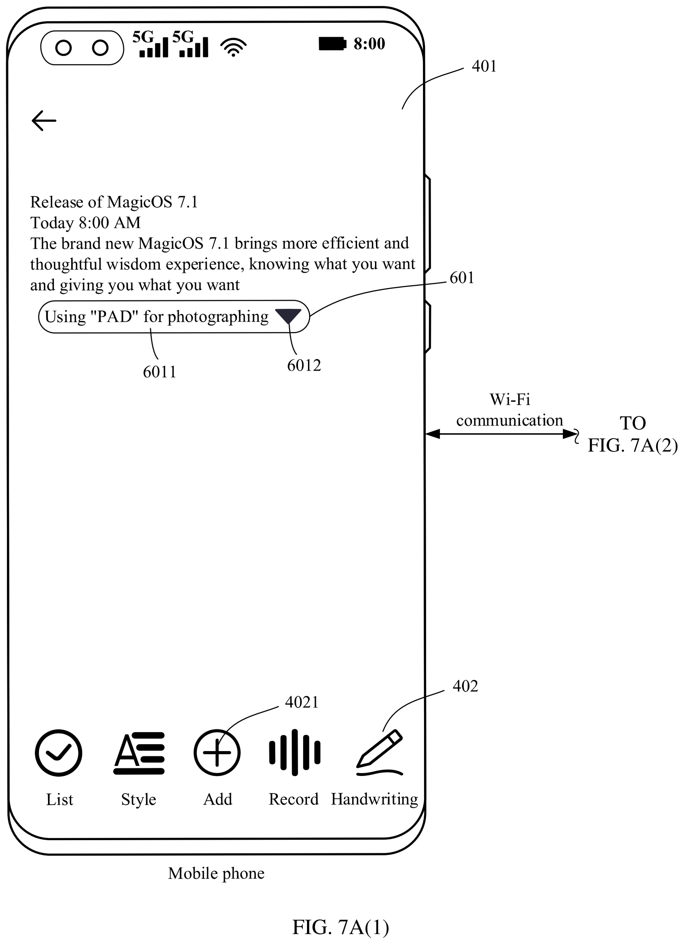

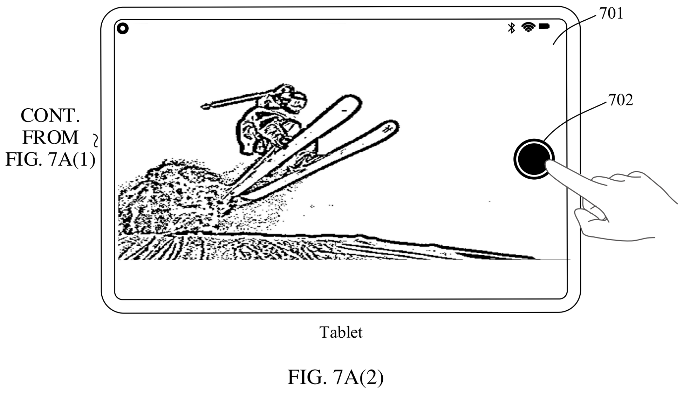

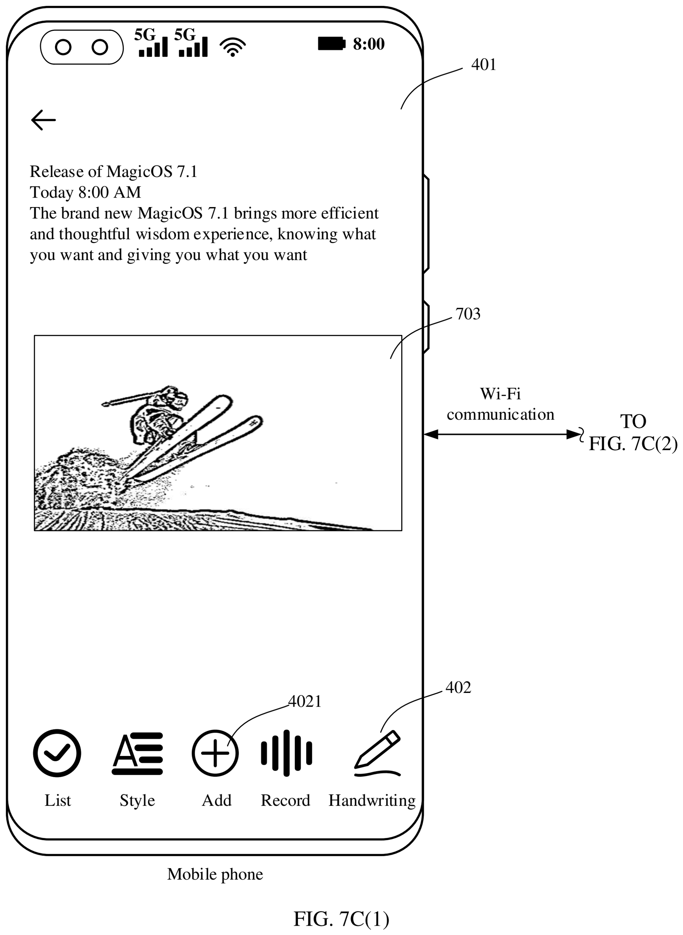

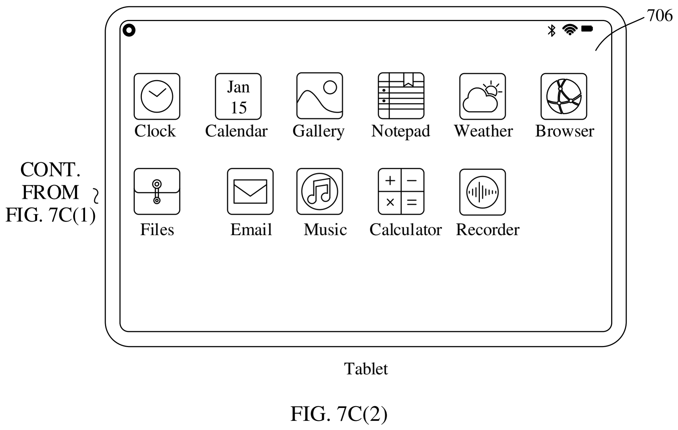

FIG. 7A(1)~FIG. 7C(2) are example schematic diagrams of user interfaces. As shown in FIG. 7A(1) and FIG. 7A(2), a mobile phone cancels display of an option display area 403 in response to a received user operation, and displays a tag 601 at a current cursor position (it is assumed that the current cursor position is located at an end of character content). It should be noted that a cursor may be displayed at the end of the character content or may be hidden. This is not limited in this application. Further, it should be noted that in this embodiment of this application, Notepad is used as an example for description, and an insertion position of a character or other content in the software is subject to the cursor. As described above, a method in this embodiment of this application may be further applied to some other types of software, for example, software such as drawing or a mind map. There may be no cursor in the software. In this case, the insertion position of the character or the another content (for example, the tag in this embodiment of this application) may be set based on a user operation (for example, a tap operation). This is not limited in this application.

For example, the tag 601 includes but is not limited to an invoked object 6011 (which may also be referred to as a first insertion object, an added object, and the like, which is not limited in this application) and a "More" option 6012. The invoked object 6011 is used to describe an electronic device that is being invoked currently and an invoked function. For example, in a current scenario, in response to a received operation of tapping a "Take photo" option by a user, the mobile phone determines that the invoked electronic device is a tablet, and the invoked function is a photographing function of the tablet. Correspondingly, the invoked object 6011 in the tag 601 displayed on the mobile phone displays "Using "PAD" for photographing", to indicate that the mobile phone is invoking the photographing function of the tablet.

The "More" option 6012 may provide more tag functions. The user may switch the invoked electronic device and/or the invoked function by using the "More" option 6012. Further descriptions are provided in detail in the following embodiments.

For example, a position relationship between the invoked object 6011 and the "More" option 6012 in the tag 601 is merely an example, and may be set according to an actual requirement. This is not limited in this application.

For example, a style of the tag 601 is an example, and may be set according to an actual requirement. This is not limited in this application.

For example, a height of the tag 601 may be the same as or different from a line height of a character in a note, and may be set according to an actual requirement. This is not limited in this application.

Optionally, the user may set the style (including a size, a color, and a frame) of the tag in a Tag application. This is not limited in this application.

Optionally, the tag 601 may be highlighted, and is configured to highlight a position at which the tag is located.

Optionally, the tag 601 may be set to a square type, a tight type, or a through type. The style of the tag 601 may be default, or may be set by the user in the Tag application. This is not limited in this application.

Still as shown in FIG. 7A(1) and FIG. 7A(2), in response to the received user operation, the mobile phone determines that the photographing function of the tablet needs to be invoked. The mobile phone may send a camera invoking request to the tablet through a Wi-Fi connection between the mobile phone and the tablet, to request to invoke a camera of the tablet. In response to the received camera invoking request, the tablet (which is specifically a Tag application in the tablet) starts the camera of this device to capture an image. A photographing preview interface is displayed in a display interface 701 of the tablet, and the photographing preview interface includes but is not limited to a photographing preview window and a photographing key 702 (or referred to as a photographing control). The photographing preview window may be configured to display an image captured by the camera in real time. A position and a size of the photographing preview window may be set according to an actual requirement. This not limited in this application.

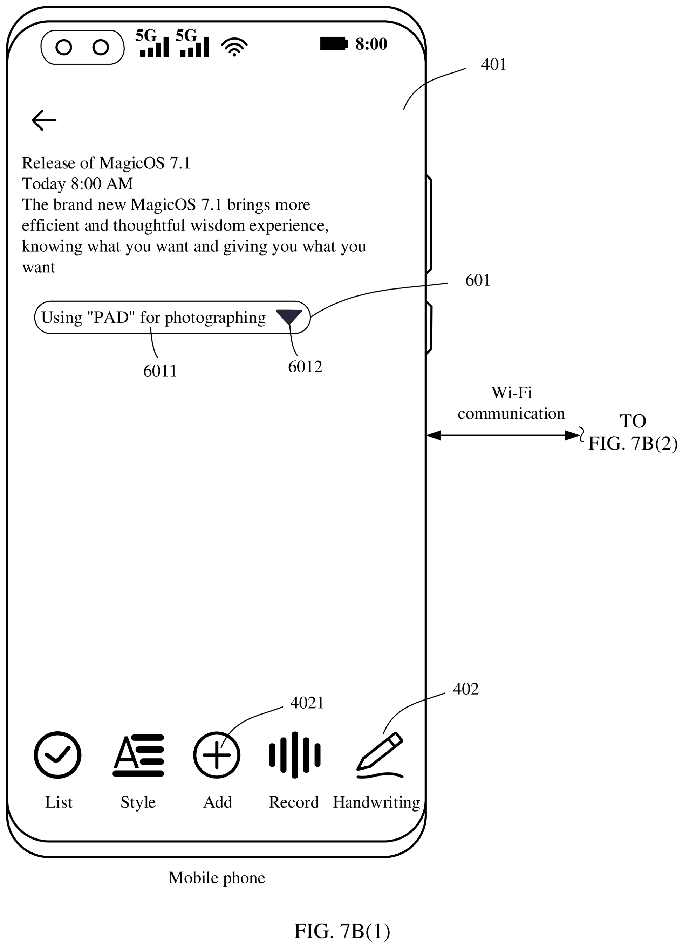

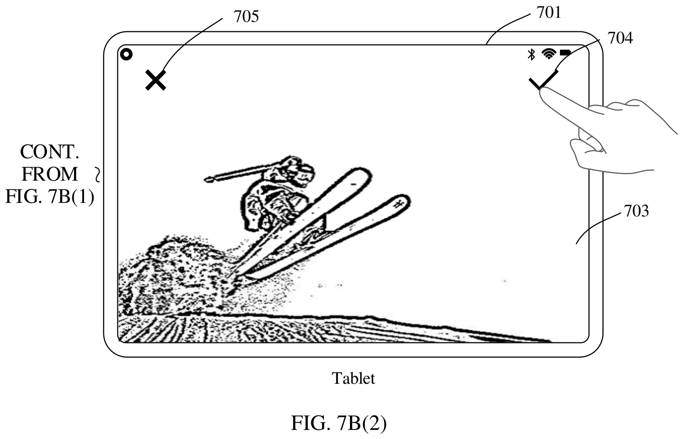

For example, the user may tap the photographing key 702, to indicate the tablet to perform photographing. As shown in FIG. 7B(1) and FIG. 7B(2), in response to a received user operation, content displayed in the display interface 701 includes but is not limited to an image 703 (which may also be referred to as a preview image, which is not limited in this application) captured by the camera, a "Confirm" option 704, a "Cancel" option 705, and the like. In an example, if the user taps the "Cancel" option 705, the tablet returns to the photographing preview interface shown in FIG. 7A(1) and FIG. 7A(2), that is, re-invokes the camera to capture a current image. In this instance, the user may tap the "Confirm" option 704, to confirm insertion (or addition) of the image 703 into the Notepad application.

As shown in FIG. 7C(1) and FIG. 7C(2), the tablet sends the image 703 to the mobile phone through the Wi-Fi connection between the table and the mobile phone in response to a received operation of tapping the "Confirm" option 704 by the user. Optionally, after the tablet sends the image 703, a home screen 706 is displayed. In another embodiment, after sending the image 703, the tablet may alternatively display an interface displayed before a photographing action is performed, for example, display a video application. This is not limited in this application.

For example, a Tag application of the mobile phone receives the image 703 sent by the tablet. The Tag application may transfer the image 703 to the Notepad application. The Notepad application may delete the tag 601, and insert the image 703 at a position of the original tag 601. Optionally, an insertion position of the image 703 may be subject to a position at which a left frame of the original tag 601 is located. In another embodiment, the insertion position of the image 703 may alternatively be a position at which a right frame or a center of the original tag 601 is located. This is not limited in this application.

It should be noted that, as shown in FIG. 7C(1) and FIG. 7C(2), there is an offset between an origin of the image 703 (for example, an upper left corner of the image 703) and the position of the original tag 601, because the Notepad application adjusts the insertion position of the image 703 based on a size of the image 703, to completely display the image 703. It may be understood that, in this scenario, the insertion position of the image 703 may still be considered as the position at which the original tag 601 is located.

Optionally, the Notepad application may adjust the size of the image 703, and then insert the image 703 into a note. A specific adjustment policy may be set according to an actual requirement. This is not limited in this application.

In a possible implementation, the Wi-Fi connection between the mobile phone and the tablet may continue to be maintained, and is automatically disconnected after aging duration (which may be set according to an actual requirement, which is not limited in this application) expires. In this example, in the aging duration, if the user performs a procedure in FIG. 4A to FIG. 4C again, that is, the mobile phone re-invokes the tablet to perform functions such as photographing, a connection establishment process shown in FIG. 5 may be skipped, and data is directly exchanged based on the Wi-Fi connection that is not disconnected currently.

In another possible implementation, after the tablet transmits the image 703 to the mobile phone, the tablet may disconnect the Wi-Fi connection from the mobile phone. In this example, if the user performs the procedure in FIG. 4A to FIG. 4C again to invoke the tablet to perform functions such as photographing, the mobile phone and the tablet re-perform the connection establishment procedure in FIG. 5.

Therefore, this embodiment of this application may provide a convenient invoking method, to determine, in a tag insertion manner, a position of an object that needs to be inserted. In addition, the object that needs to be inserted may be selected by using a tag. In addition, according to the tag insertion manner, operation steps in a case of the first insertion object can be effectively simplified, operation duration can be shortened, and the user is prevented from missing important content because of the first insertion object.

In the invoking method in this embodiment of this application, in a process of executing the first insertion object, another operation may be further performed in an application interface in which insertion is to be performed. For example, note content is modified or deleted, and a size or a position of an inserted image is adjusted. This is not limited in this application.

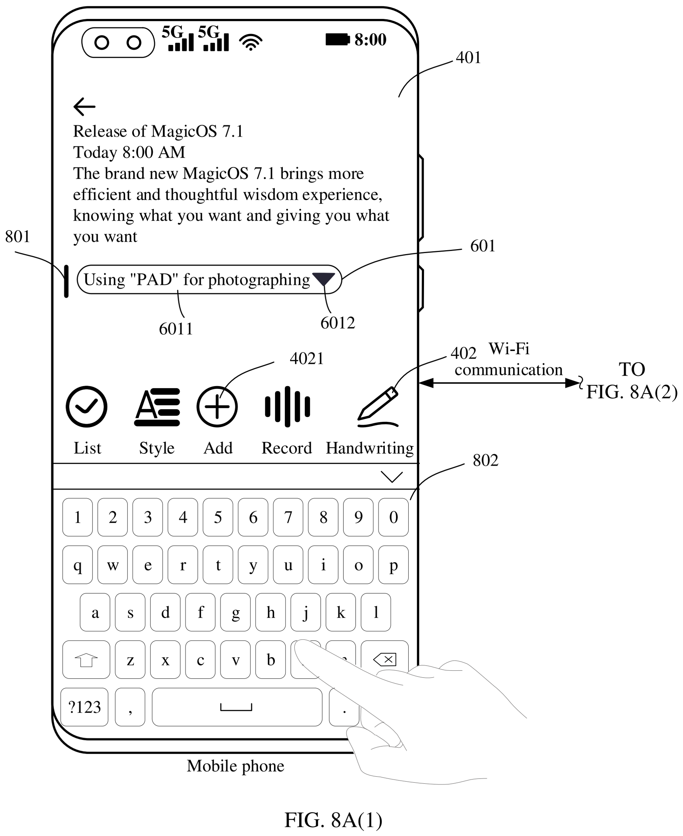

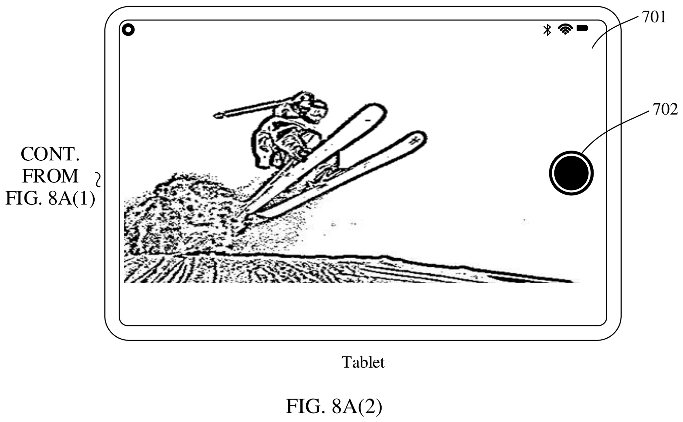

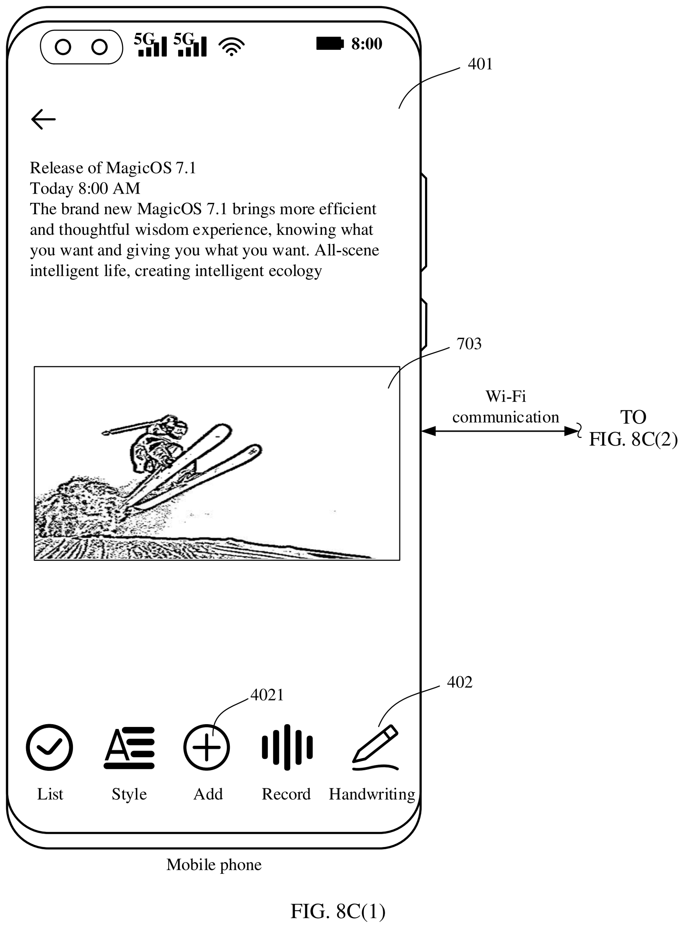

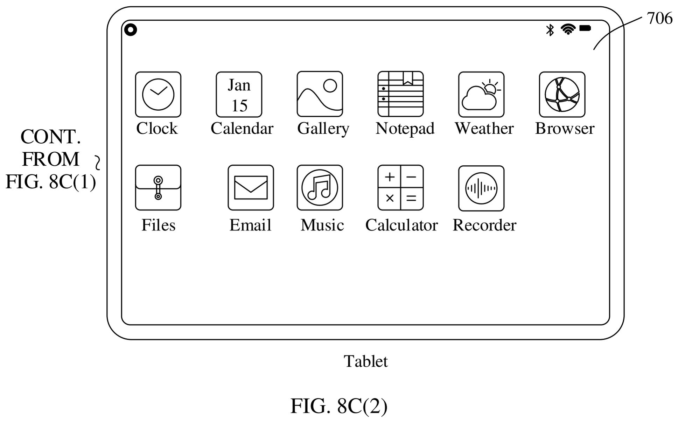

The following provides descriptions by using an example in which a character is modified in a process of a first insertion object. FIG. 8A(1)~FIG. 8C(2) are example schematic diagrams of user interfaces. As shown in FIG. 8A(1) and FIG. 8A(2), a mobile phone invokes a photographing function of a tablet, and a camera of the tablet is capturing an image. In other words, the tablet currently displays a photographing preview interface, and the photographing preview interface is displaying an image captured by the camera in real time. In this scenario, a user may tap any position in a Notepad application interface 401. The mobile phone displays a soft keyboard 802 in response to a received user operation. For example, the user may tap a position at which a position needs to be inserted, to move a cursor 801 to a position at which a character is to be inserted. For example, FIG. 8A(1) and FIG. 8A(2) are used as an example. After the mobile phone inserts a tag 601, a position of the cursor 801 is after the tag 601 (that is, after a right frame of the tag 601). The user may tap a position after a last character in a note. The mobile phone displays the soft keyboard 802 in response to the received user operation, and displays the cursor 801 at the position (for example, a first position) tapped by the user, to indicate that a subsequently input character or image is inserted at the position. The position of the cursor 801 is only an example. The user may move the cursor to any position. Optionally, in some instances, the cursor 801 may be hidden. Only after the user taps an interface, the cursor is displayed at a corresponding position in response to a received user operation. This is not limited in this application.

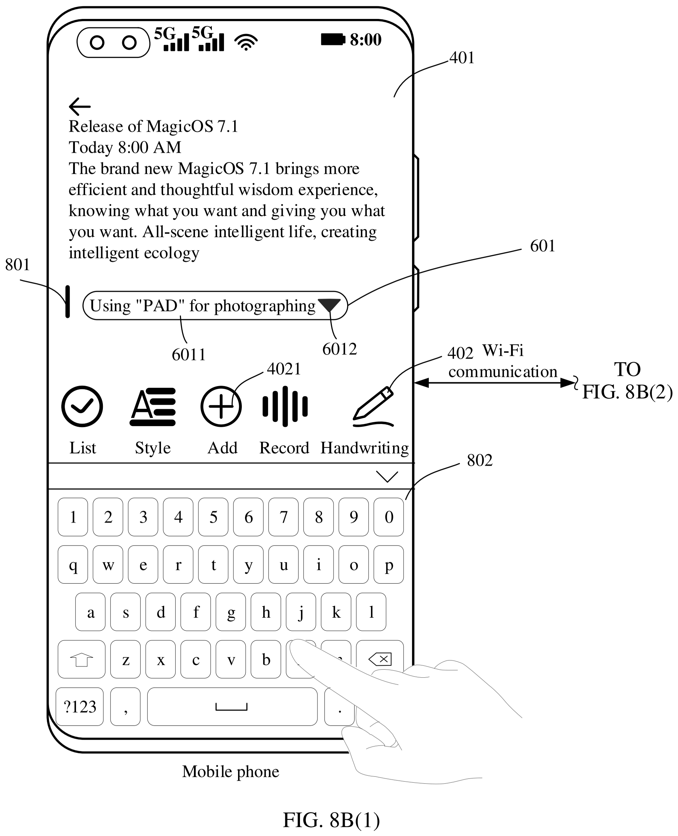

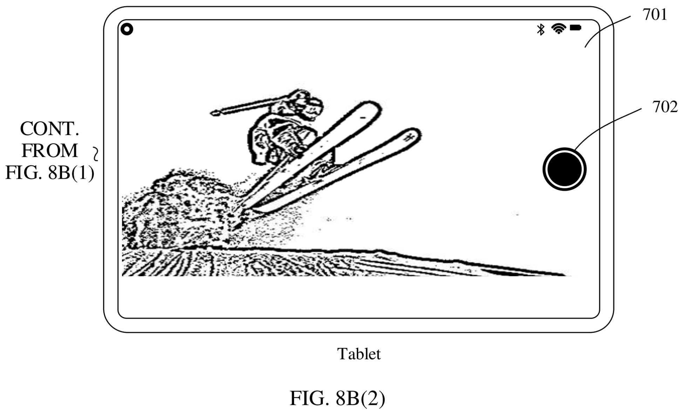

As shown in FIG. 8B(1) and FIG. 8B(2), after the user enters a character, the cursor 801 moves to a currently displayed position. Correspondingly, the tag 601 moves backward as the character is entered. That is, the tag 601 moves from the first position shown in FIG. 8A(1) and FIG. 8A(2) to a second position shown in FIG. 8B(1) and FIG. 8B(2). In this process, the camera of the tablet continuously captures images. Optionally, the image captured by the tablet may be changed. This is not limited in this application.

For example, the user performs operations such as photographing and image confirmation, that is, as shown in FIG. 7A(1) and FIG. 7A(2) and FIG. 7B(1) and FIG. 7B(2). After the tablet transmits the image to the mobile phone through a Wi-Fi connection, the tablet displays a home screen 706. For specific descriptions, refer to FIG. 7C(1) and FIG. 7C(2). Details are not described herein again.

As shown in FIG. 8C(1) and FIG. 8C(2), the mobile phone receives an image 703 sent by the tablet, deletes the tag 601 (or may be understood as canceling display of the tag 601), and displays the image 703 at a position of the original tag 601 (that is, the second position shown in FIG. 8B(1) and FIG. 8B(2)). That is, in this embodiment of this application, an insertion position of the image moves with the position of the tag. For example, compared with the position of the image 703 in FIG. 7C(1) and FIG. 7C(2), the position of the image 703 in FIG. 8C(1) and FIG. 8C(2) is moved down by one line.

It should be noted that, in the foregoing embodiment, that the user modifies note content in real time in a process in which the camera of the tablet captures the image is merely taken as an example for description. In this embodiment of this application, when any step of the invoking method is performed, the user may modify the note content in real time. For example, in a scenario shown in FIG. 7B(1) and FIG. 7B(2), that is, in a process in which the user taps a photographing option and the tablet displays a preview image, the user may also modify the note content. In other words, the user may modify the note content at any moment before the user taps a "Confirm" option 704, that is, before the tablet sends the image to the mobile phone. It may be understood that the user may modify the note content on a mobile phone side before the mobile phone displays an inserted image.

In this way, according to the invoking method provided in this embodiment of this application, a real-time modification solution may be further provided, so that the user can modify, at any time in a case of the first insertion object, that is, in a process of invoking another device, content to be inserted in an interface. That is, using another function of a current application by the user is not affected in the process in which the mobile phone invokes the another device.

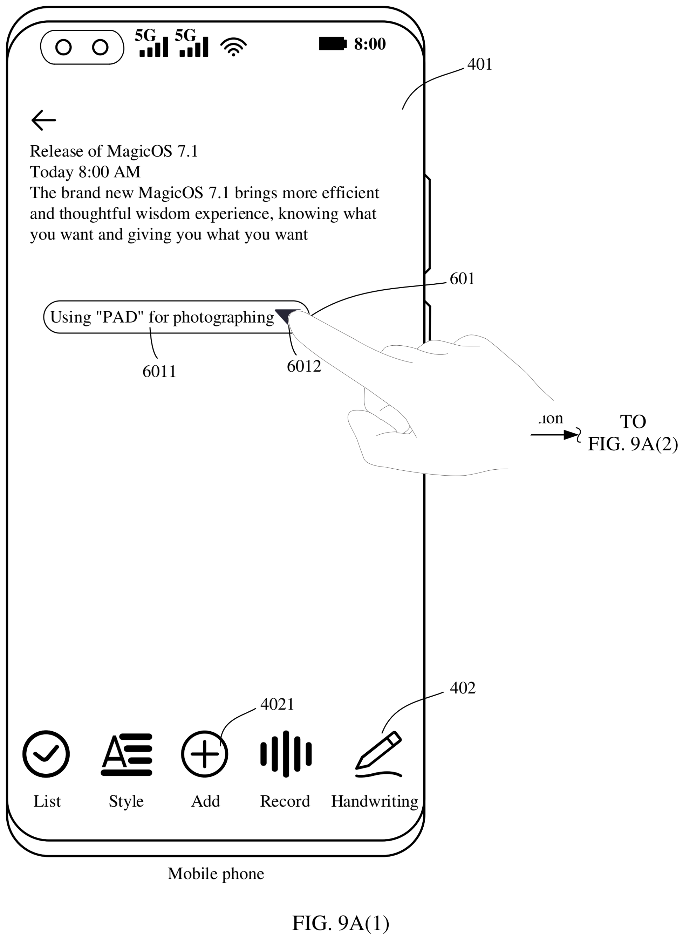

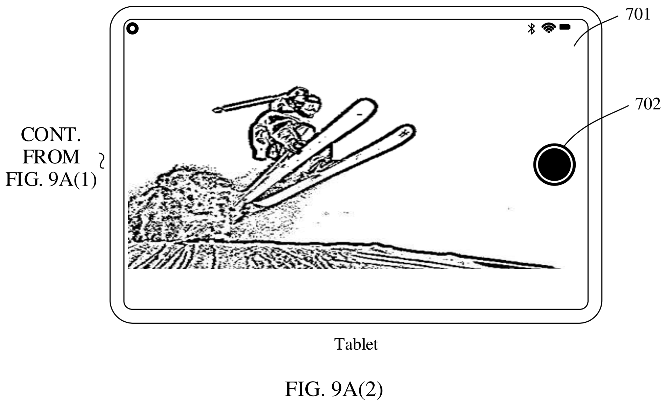

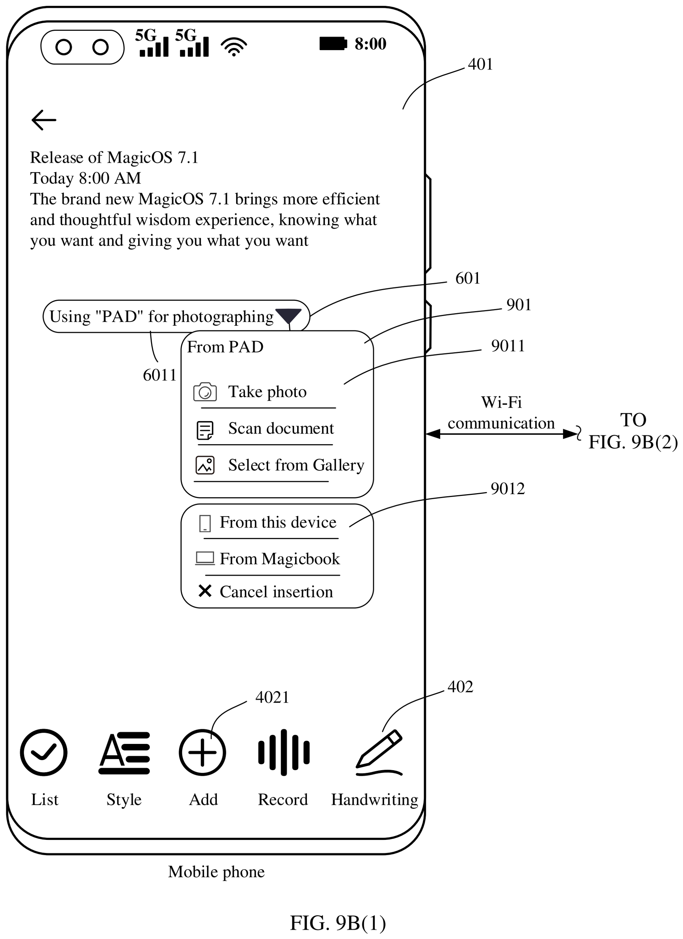

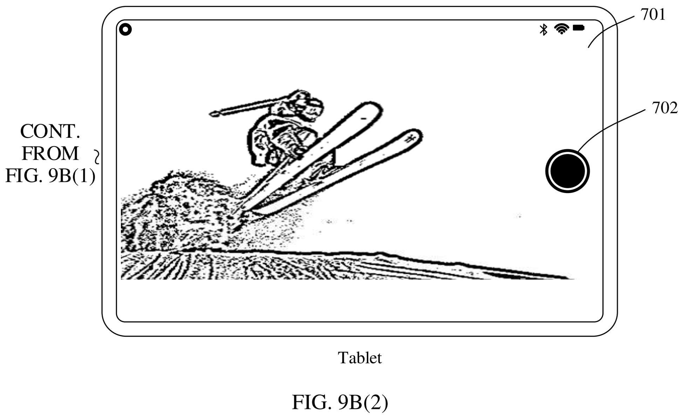

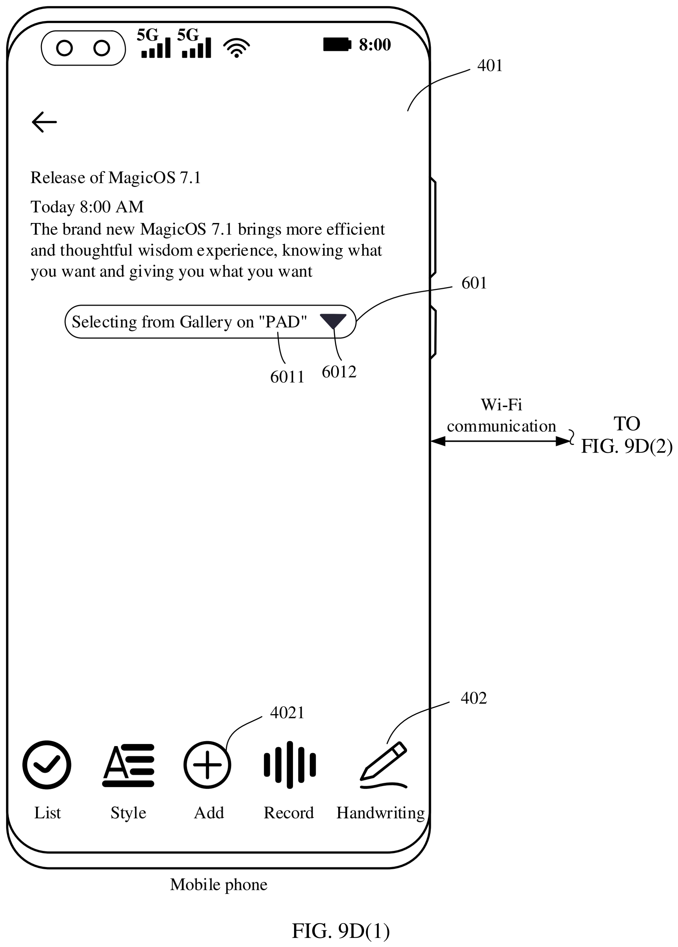

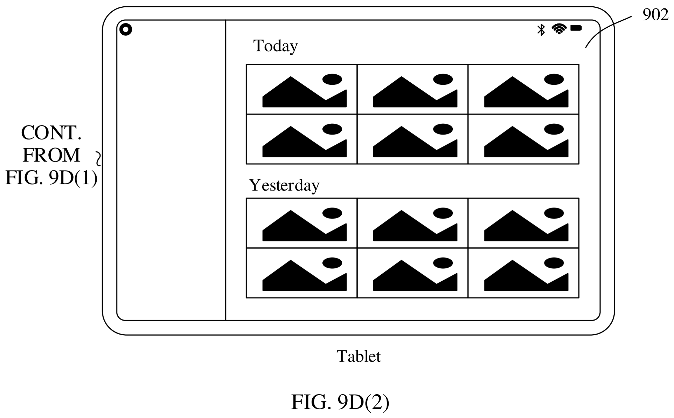

For example, a tag in the embodiments of this application may further provide more function choices. FIG. 9A(1)~FIG. 9D(2) are example schematic diagrams of user interfaces. As shown in FIG. 9A(1) and FIG. 9A(2), a user may tap a "More" option 6012 in a tag 601, to replace a first insertion object, including replacing an invoked electronic device and/or replacing an invoked function. As shown in FIG. 9B(1) and FIG. 9B(2), for example, a mobile phone displays a tag option box 901 in response to a received operation of tapping the "More" option 6012 by the user. The tag option box 901 includes but is not limited to an option box 9011 and an option box 9012. The option box 9011 includes an option corresponding to an invocable function provided by a device that is being invoked currently, for example, a tablet. For example, as described above, after the mobile phone and the tablet establish a Wi-Fi connection, the mobile phone may obtain an invocable function provided by a Tag application on the tablet, for example, includes but is not limited to a photographing function, a document scanning function, a Gallery function, and the like. Correspondingly, the option box 9011 may include but is not limited to options such as a "Take photo" option, a "Scan document" option, and a "Select from Gallery" corresponding to the corresponding functions provided by the tablet. That is, the options included in the option box 9011 is the same as that in FIG. 4C. It may be understood that, in this embodiment of this application, the user may preliminarily select the first insertion object (including the invoked electronic device and/or the invoked function) based on in FIG. 4B and FIG. 4C. After the tag is inserted and before the first insertion object, the user may further change the first insertion object by using the "More" option 6012.

For example, the option box 9012 includes but is not limited to an option corresponding to another invocable device, for example, a "This device" option and a "From Magicbook" option. Optionally, the option box 9012 may further include a "Cancel insertion" option. The "This device" option is used to switch the invoked device. For example, if the user taps the "This device" option, the mobile phone invokes a corresponding function of this device. A specific example is described below. The "From Magicbook" option is also used to switch the invoked device. For example, if the user taps the option, the tag option box 901 displays an option corresponding to an invocable function provided by a notebook (namely, Magicbook). If the user taps the "Cancel insertion" option, the tag 601 can be deleted. The user may alternatively delete the tag 601 in another manner. For example, the user taps a position on a right side of the tag 601, to invoke a soft keyboard (802 shown in FIG. 8B(1) and FIG. 8B(2)), and taps a "Delete" control on the soft keyboard. The mobile phone may delete the tag 601 in response to the foregoing operation performed by the user.

It should be noted that in this instance, the mobile phone currently invokes the tablet. In other words, when the tag is initially inserted, that is, in a scenario shown in FIG. 4A to FIG. 4C, the user selects a photographing function of the invoked tablet. Correspondingly, the option box 9011 displays options corresponding to more invocable functions such as document scanning that can be provided by the tablet. It is assumed that when the tag is initially inserted, that is, in the scenario shown in FIG. 4A to FIG. 4C, the user selects a photographing function of the invoked notebook (namely, Magicbook) Correspondingly, the option box 9011 displays more invocable functions that can be provided by Magicbook.

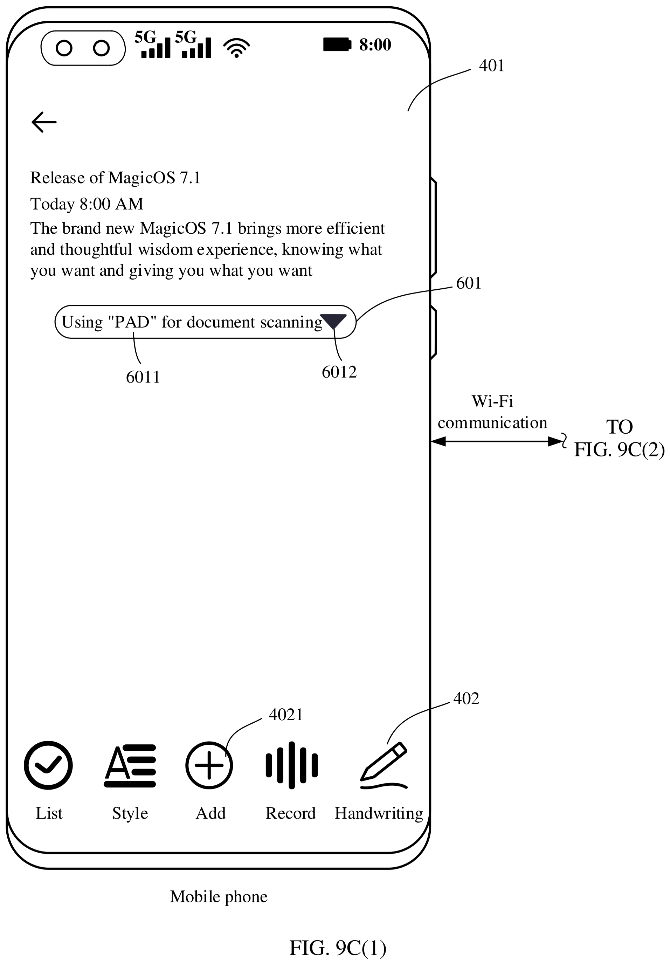

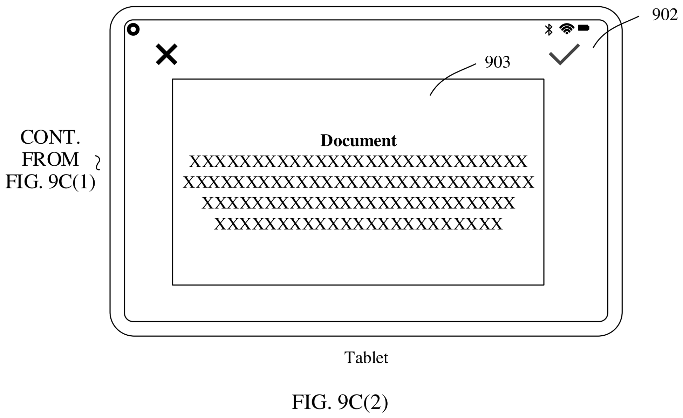

In this instance, an example in which the user taps the "Scan document" option in the "From PAD" option in the option box 9011, that is, the user indicates to invoke the document scanning function of the tablet is used for description. Alternatively, it may be understood that the user indicates to switch the currently invoked photographing function of the tablet to the document scanning function. As shown in FIG. 9C(1) and FIG. 9C(2), the mobile phone updates an invoked object 6011 in the tag 601 to "Using PAD for document scanning" in response to a received operation of tapping the "Scan document" option by the user, to indicate that the currently invoked device is the tablet and the invoked function is the document scanning function of the tablet.

For example, the mobile phone sends a document scanning function invoking request to the tablet, to request to invoke the document scanning function of the tablet. The tablet cancels the photographing function in response to the received document scanning function invoking request, that is, cancels display of a photographing preview interface. The tablet continues to invoke the camera to perform the document scanning function, and the tablet displays a document scanning result in a display interface 902.

In a possible implementation, the document scanning function provided by the tablet is used to: recognize a document in an image captured by the camera and a boundary of the document, and crop, based on the recognized boundary, the image captured by the camera, to obtain an image 903 (briefly referred to as document image) that includes only document content. Correspondingly, the tablet sends the recognized document image 903 to the mobile phone. The mobile phone displays the document image 903 in the display interface 902. For a specific display manner, refer to FIG. 7C(1) and FIG. 7C(2). Details are not described herein again. It should be noted that the document scanning result displayed on the tablet in FIG. 9C(1) and FIG. 9C(2) is only an example. This application sets no limitation thereto.

In a possible implementation, the mobile phone may further invoke a text recognition function of the tablet. The text recognition function provided by the tablet is used to: obtain an image scanned by the camera, and recognize a character in the image (for example, perform optical character recognition (optical character recognition, OCR)), to obtain an identification result, namely, a result of converting the character in the image into a text.

For example, the "Cancel" option and the "Confirm" option may also be displayed in the display interface 902 of the tablet. In an example, if the user taps the "Cancel" option, the tablet re-performs document scanning, to obtain and display a new document scanning result. In this instance, the user may tap the "Confirm" option, to confirm insertion of the document scanning result obtained by the tablet into a Notepad application of the mobile phone. The tablet sends the document scanning result to the mobile phone through the Wi-Fi connection in response to a received user operation. In addition, the tablet displays the home screen (for descriptions, refer to the foregoing descriptions, and details are not described herein again).

For example, the mobile phone deletes the tag 601 in response to the received document result, and displays the received document scanning result at a position of the original tag 601. For a specific display manner, refer to FIG. 7C(1) and FIG. 7C(2). Details are not described herein again. Optionally, Notepad may directly insert the document scanning result at the position of the original tag 601. In another embodiment, Notepad may insert the document scanning result in a next line of the position of the original tag 601, which may be set according to an actual requirement. This is not limited in this application.

As shown in FIG. 9D(1) and FIG. 9D(2), in this instance, an example in which the user taps the "Select from Gallery" option in the option box 9011 in FIG. 9B(1) and FIG. 9B(2), that is, indicates the mobile phone to invoke a Gallery application on the tablet is used for description. Alternatively, it may be understood that the user indicates to switch the currently invoked photographing function of the tablet to invoking Gallery on the tablet. The mobile phone switches the invoked object 6011 in the tag 601 to "Selecting from Gallery on "PAD"" in response to a received operation of tapping the "Select from Gallery" option by the user, to indicate that the currently invoked device is the tablet and the invoked function is Gallery on the tablet.

For example, the mobile phone sends a Gallery invoking request to the tablet, to request to invoke Gallery on the tablet. The tablet cancels the photographing function (namely, an operation that is being performed in FIG. 9B(1) and FIG. 9B(2)) in response to the received Gallery invoking request, and displays a Gallery application interface in the display interface 902. The Gallery application interface includes but is not limited to at least one image stored in the tablet (or may be a cloud).

For example, the user may tap an image that needs to be inserted. The tablet may display an image confirmation interface in response to a received user operation. For an interface display manner, refer to FIG. 7B(1) and FIG. 7B(2). That is, the interface includes but is not limited to an image, a "Cancel" option, a "Confirm" option, and the like.

In this instance, the user taps the "Confirm" option, to determine to insert an image selected by the user. The tablet sends the image to the mobile phone in response to a received operation of tapping the "Confirm" option by the user. In addition, the tablet displays the home screen (for descriptions, refer to the foregoing descriptions, and details are not described herein again).

It should be noted that, in an interface of the tablet in FIG. 9D(1) and FIG. 9D(2), the user may alternatively select a plurality of images at one time, and insert the plurality of images into the mobile phone.

For example, the mobile phone deletes the tag 601 (that is, cancels display of the tag 601) in response to the received image, and displays the received image at the position of the original tag 601. For a specific display manner, refer to FIG. 7C(1) and FIG. 7C(2). Details are not described herein again.

It should be noted that all solutions for changing the first insertion object in the foregoing embodiments are described based on FIG. 9B(1) and FIG. 9B(2), that is, by using an example in which the mobile phone changes the invoked function in response to the received user operation in a process in which the camera of the tablet is capturing an image. In another embodiment, the foregoing solutions for changing the first insertion object may be performed at any moment before the user confirms insertion of an image or a character on the tablet, for example, taps the confirm option, in other words, before the tablet sends the image to the mobile phone. It may be understood that the foregoing solutions for changing the first insertion object may be performed before the mobile phone displays the inserted image. An implementation thereof is the same as that in the foregoing. Examples are not provided one by one for description in this application.

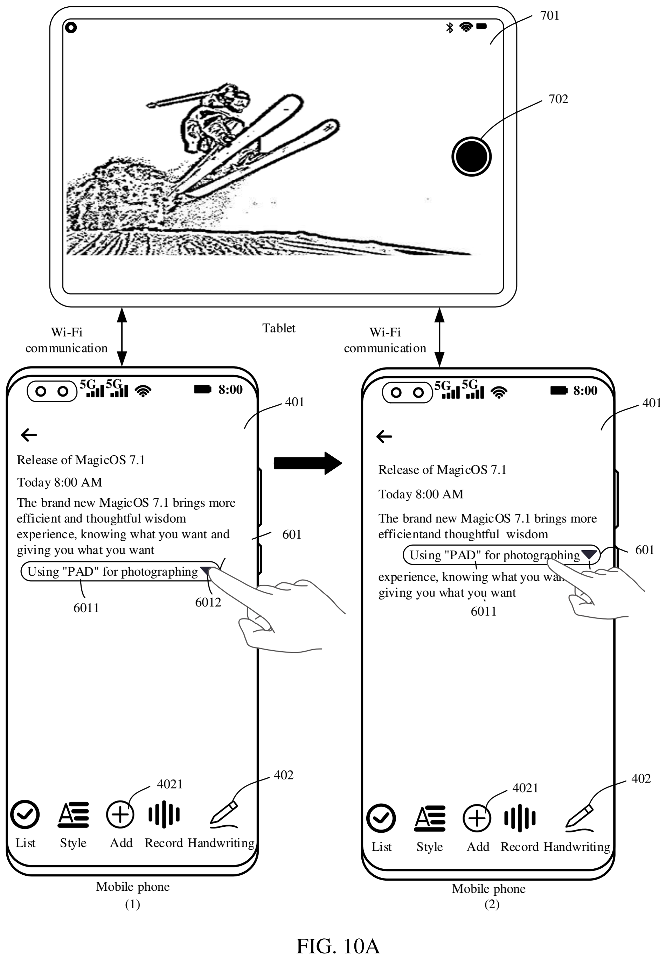

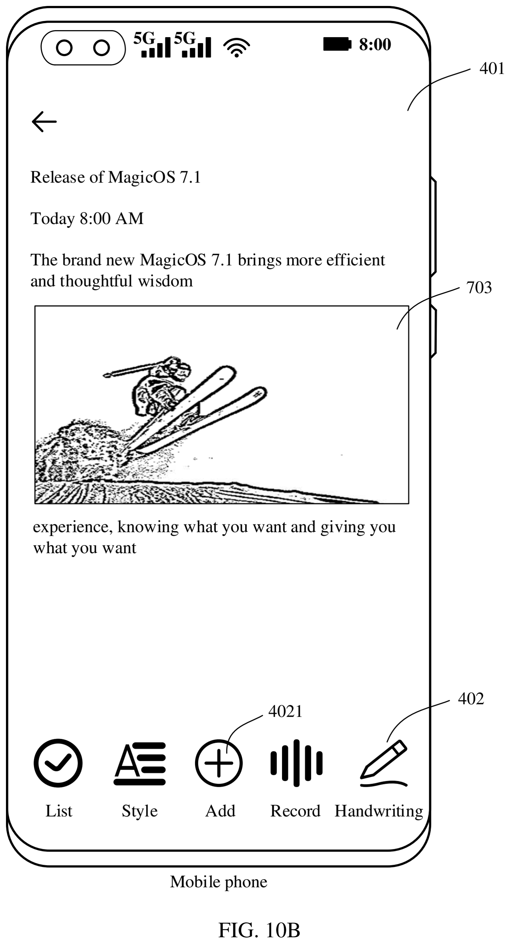

The invoking method in the embodiments of this application further supports a position change of a tag, so that the tag and a subsequently inserted object (including but not limited to a character, an image, and the like) move to a specified position as indicated by a user. The following provides descriptions by using a specific example. FIG. 10A and FIG. 10B are example schematic diagrams of user interfaces. As shown in (1) in FIG. 10A, a mobile phone currently invokes a photographing function of a tablet, and a photographing preview interface is displayed in a display interface 701 of the tablet. For specific descriptions, refer to FIG. 7B(1) and FIG. 7B(2). Details are not described herein again. For example, the user may touch and hold (or may perform another gesture, which is not limited in this application) a tag 601, and drag the tag 601. As shown in (2) in FIG. 10A, the mobile phone determines, in response to a received touch and hold operation performed by the user, that the user needs to drag the tag 601. Then, the mobile phone moves the tag 601 following a finger of the user in an interface 401 in response to a received drag operation, for example, moves to a third position shown in (2) in FIG. 10A (the position is only an example, and is not limited in this application). For example, in a process in which the user drags the tag 601, the photographing preview interface is continuously displayed in the display interface 701 of the tablet, and the photographing preview interface displays an image captured by a camera of the tablet in real time. That is, in a process in which the user moves a position of the tag 601, the mobile phone keeps a state of invoking the photographing function of the tablet.

Optionally, in the process of moving the tag 601, a position of note content in a Notepad interface 401 may change as the tag moves. For example, as shown in (2) in FIG. 10A, in response to a received user operation, the mobile phone moves the tag 601 from a first position displayed in (1) in FIG. 10A to the third position shown in (2) in FIG. 10A. Some words, for example, "experience, knowing what you want and giving you what you want" in the figure moves backward from an original position (namely, the third position) to a position after a right frame of the tag 601.

Optionally, as described above, a layout of the tag 601 may be a square type, a tight type, a through type, or the like. The mobile phone may correspondingly move another character based on the format of the tag 601, so that character content in a note and the tag 601 present a specified layout.

Optionally, in this embodiment of this application, if a distance (for example, a second length) between a position at which the tag is inserted and a boundary (namely, a right boundary of the display window 401) of a display window 401 is less than a length (for example, a first length) of the tag 601, In an example, the mobile phone may automatically move the tag 601 downward to a next line. Content such as a character or an image after the tag moves backward correspondingly. In another example, the mobile phone may shorten the tag 601 to a length less than or equal to the second length. For example, the mobile phone may display an invoked object 6011 in the tag 601 in a thumbnail manner. This is not limited in this application.

As shown in FIG. 10B, for example, the user may perform operations shown in FIG. 7A(1) and FIG. 7A(2) and FIG. 7B(1) and FIG. 7B(2), to indicate the tablet to send an image 703 to the mobile phone. In response to the received image 703, the mobile phone deletes the tag 601 (that is, cancels display of the tag 601), and displays the image 703 at the position of the original tag 601. Optionally, a Notepad application moves, based on a size of the image 703, an origin (that is, an upper left corner of the image 703) of the image 703 downward by one line from a position (for example, a position at which a left frame of the original tag 601 is located) to which the image 703 is to be inserted, and displays the image 703 at the position. In this example, both the position at which the origin of the image 703 is located and the position (for example, the position at which the left frame of the original tag 601 is located) to which the image 703 is to be inserted may be considered as insertion positions of the image 703. This is not limited in this application.

For example, in this example, after the Notepad application inserts the image 703, the character after the original tag 601 correspondingly moves backward. Optionally, the character after the original tag 601 may alternatively move downward by one line. This is not limited in this application.

Optionally, similar to the layout of the tag, a layout of the inserted image in the Notepad application may also be set according to an actual requirement. In addition, an arrangement manner of the character changes with an image layout.

Therefore, the invoking method in the embodiments of this application further supports the position change of the tag, so that the tag and the subsequently inserted object (including but not limited to the character, the image, and the like) move to the specified position as indicated by the user, to further improve flexibility of a first insertion object, and meet more scenario requirements of the user.

The invoking method in the embodiments of this application further supports to delete the tag 601 at any time. For example, a user may delete a tag to cancel a first insertion object, at any moment before a tablet sends the first insertion object (including an image or a character) to a mobile phone, that is, before the tablet sends an image to the mobile phone. It may also be understood as that the user may delete the tag to cancel a first insertion object, before the mobile phone displays an inserted image.

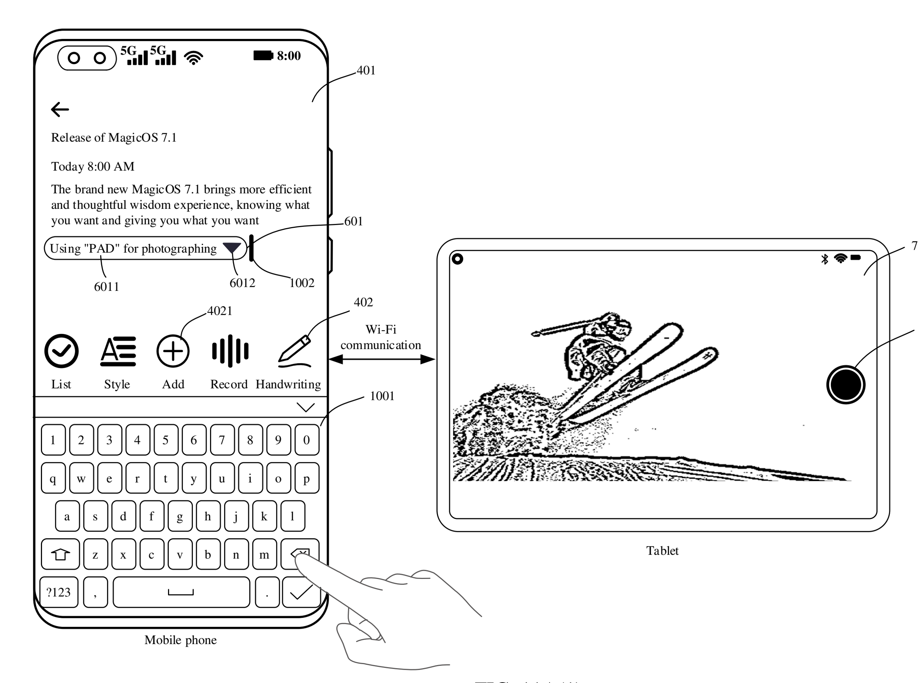

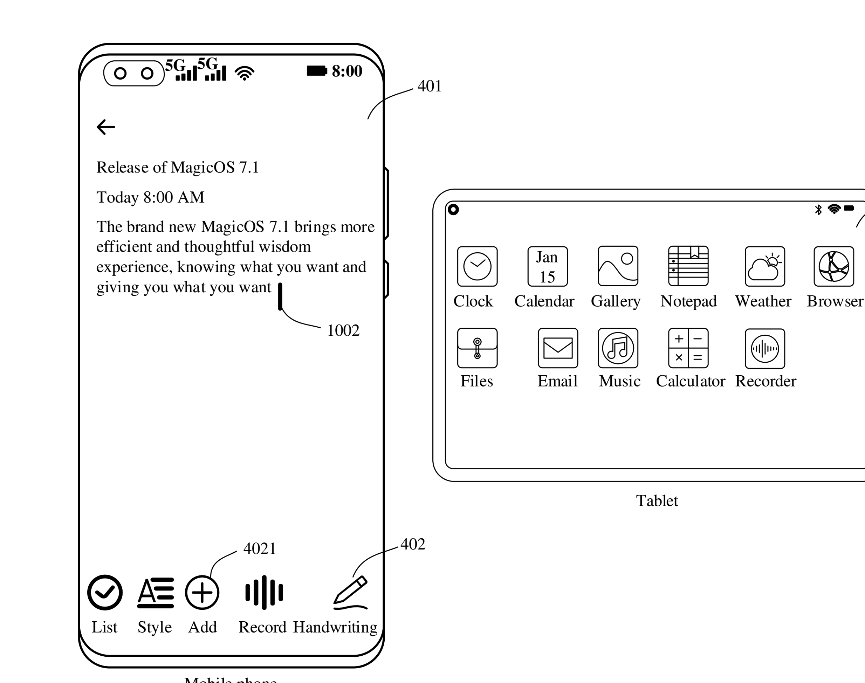

In a possible implementation, the user can delete the tag by using a cursor. FIG. 11A(1) and FIG. 11A(2) are an example schematic diagram of a user interface. As shown in FIG. 11A(1), after the mobile phone inserts the tag 601 in response to a received user operation, a current position of a cursor 1002 is located after a right frame of the tag 601. Optionally, the mobile phone may hide the cursor after displaying the tag 601, and display the cursor after the mobile phone displays a soft keyboard in response to a received user operation, that is, determines that character content needs to be entered. This is not limited in this application. That is, as described above, in some instances, the cursor may be hidden, and the cursor is displayed only after an operation of tapping an interface by the user is received. This is not limited in this application.

For example, the user taps any position in a Notepad application interface 401, and the mobile phone displays a soft keyboard in response to a received user operation. The user may tap a Delete key on the soft keyboard, to delete content before the cursor 1002. As shown in FIG. 11A(2), the mobile phone deletes the content before the cursor 1002, that is, deletes the tag 601, in response to a received operation of tapping the Delete key by the user.

As shown in FIG. 11A(2), after deleting the tag 601, the mobile phone sends indication information to the tablet, to indicate to cancel invoking of the tablet. In response to the received indication information, the tablet cancels display of a photographing preview interface, and displays a home screen 1101 (or a last interface previously displayed). Optionally, the mobile phone may disconnect a Wi-Fi connection from the tablet. In another embodiment, the mobile phone may alternatively maintain the Wi-Fi connection between the mobile phone and the tablet, and disconnect the Wi-Fi connection between the mobile phone and the tablet after specific duration (and the tablet is not invoked again within the specific duration).

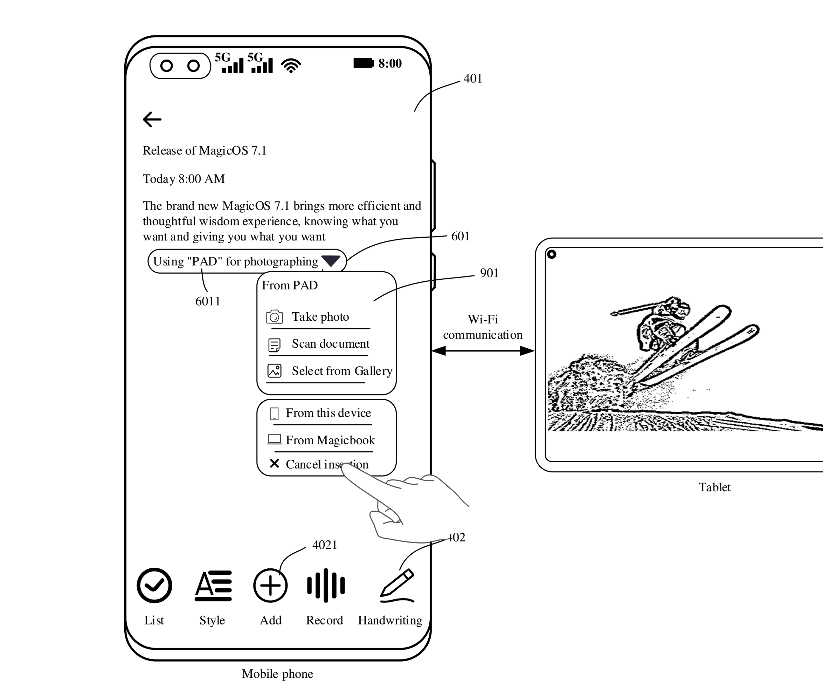

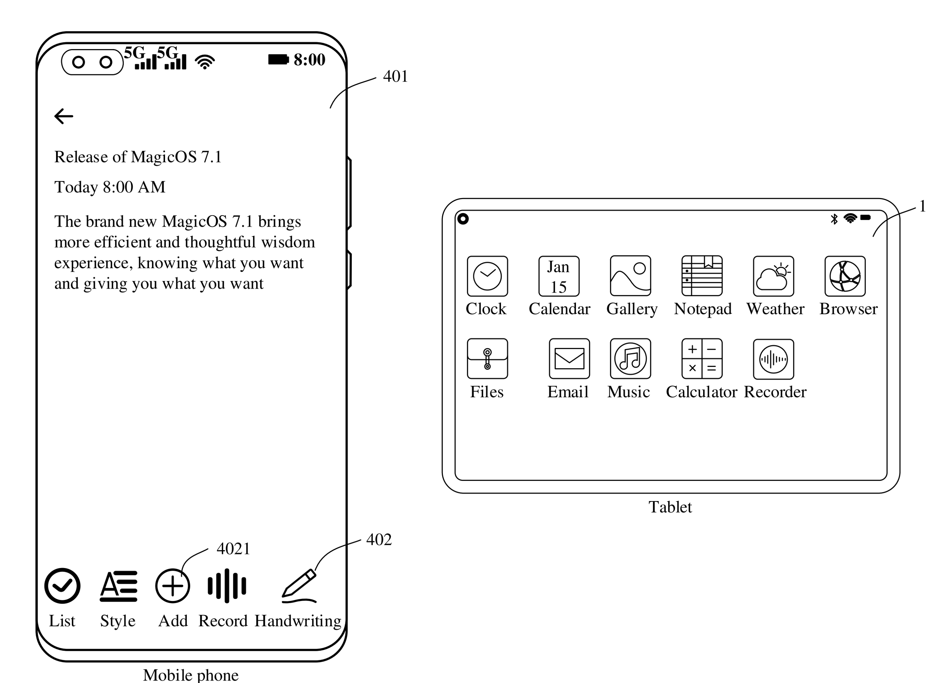

In another possible implementation, the user may delete the tag 601 by using a "Cancel insertion" option in an option box 901. As shown in FIG. 11B(1), the user can tap a "More" option 6012 in the tag 601. The mobile phone displays a tag option box 901 in response to a received operation of tapping the "More" option 6012 by the user. For descriptions of the tag option box 901, refer to the foregoing descriptions. Details are not described herein again.

For example, the user may tap the "Cancel insertion" option in the tag option box 901, to indicate to cancel display of the tag 601. As shown in FIG. 11B(2), the mobile phone deletes the tag 601 in response to a received operation of tapping the "Cancel insertion" option by the user. For specific descriptions, refer to FIG. 11A(1) and FIG. 11A(2). Details are not described herein again.

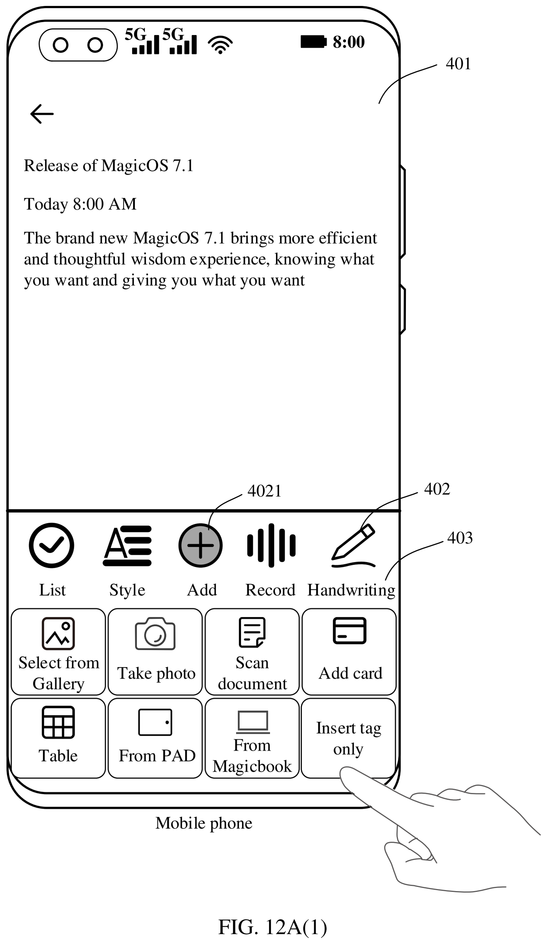

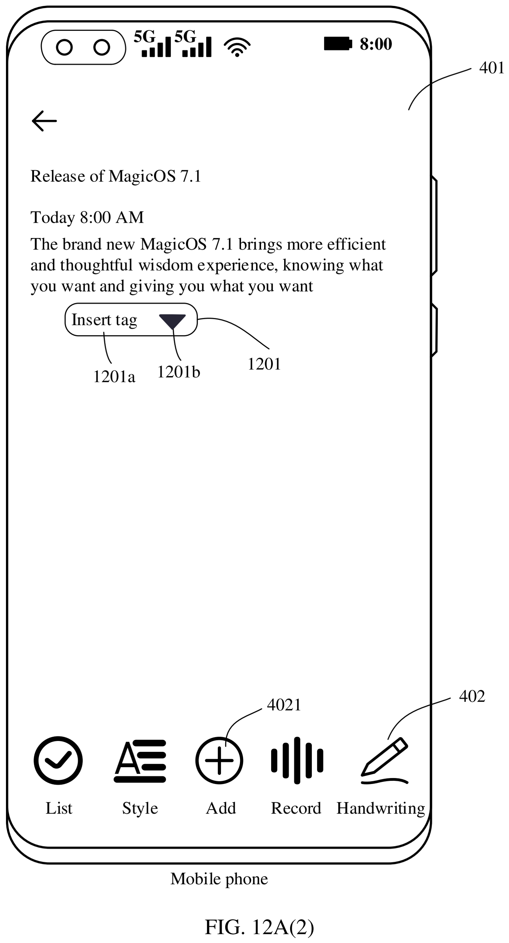

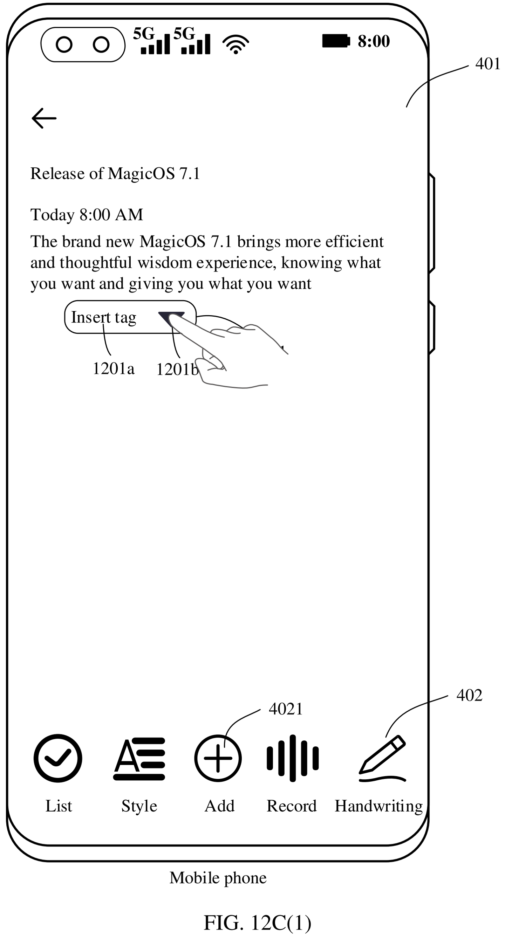

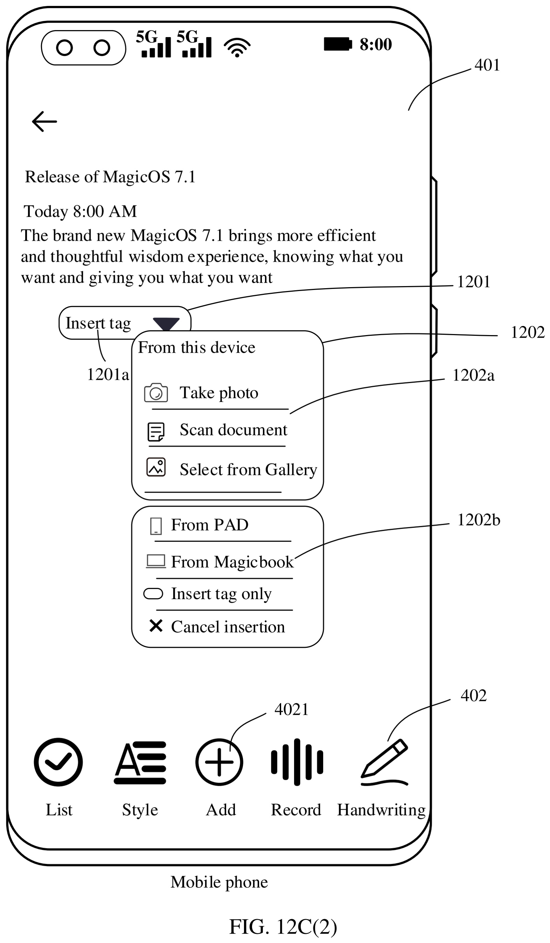

The invoking method in the embodiments of this application may further provide a temporary insertion solution. A tag may be temporarily inserted, to temporarily mark a position at which a first insertion object needs to be inserted, and resolve a problem that a user currently does not conveniently perform another operation. The user may modify the tag at any later time to insert corresponding content, thereby continuing to supplement the corresponding content. For example, FIG. 12A(1)~FIG. 12C(2) are example schematic diagrams of user interfaces. As shown in FIG. 12A(1), with reference to in FIG. 4B, after the user taps an "Add" option 4021, the mobile phone displays an option display area 403 in response to a received operation of tapping the "Add" option 4021 by the user. The option display area 403 includes but is not limited to a "Select from Gallery" option, a "Take photo" option, and the like. For specific descriptions, refer to in FIG. 4B. Details are not described herein again. In this example, the option display area 403 may further include an "Insert tag only" option, to support the user to temporarily insert the tag. The user may tap the "Insert tag only" option, to indicate to temporarily insert the tag.

As shown in FIG. 12A(2), the mobile phone inserts a tag 1201 at a current cursor position in response to a received user operation. Optionally, the current cursor position may be at an end of an entered character. For specific descriptions, refer to FIG. 7A(1) and FIG. 7A(2).

Details are not described herein again. The tag 1201 includes but is not limited to an "Insert tag" prompt 1201a and a "More" option 1201b. The "Insert tag" prompt 1201a is used to indicate that a temporary tag exists currently. Optionally, a word in the "Insert tag" prompt 1201a may also be "Temporary tag", or the like, and may be set according to an actual requirement. This is not limited in this application.

It should be noted that, in FIG. 12A(1) and FIG. 12A(2), that only one tag 1201 is temporarily inserted is taken as an example for description. In an actual use scenario, the mobile phone may insert a plurality of temporary tags based on a user operation. Positions of the plurality of temporary tags are set based on the user operation. This is not limited in this application.

Optionally, the mobile phone may also move the position of the temporary tag in response to a received user operation (for example, a drag operation). For example, the user may touch and hold the tag 1201, and drag the tag 1201 to a specified position. In response to a received operation of touching and holding the tag 1201, the mobile phone determines that the user needs to move the temporary tag 1201. Then, in response to a received drag operation, the mobile phone uses the cursor 1201 to move the tag 1201 in a direction in which a gesture of the user moves, and displays the tag 1201 at a position before the user raises a hand. A specific implementation is similar to that in FIG. 10A. Details are not described herein again.

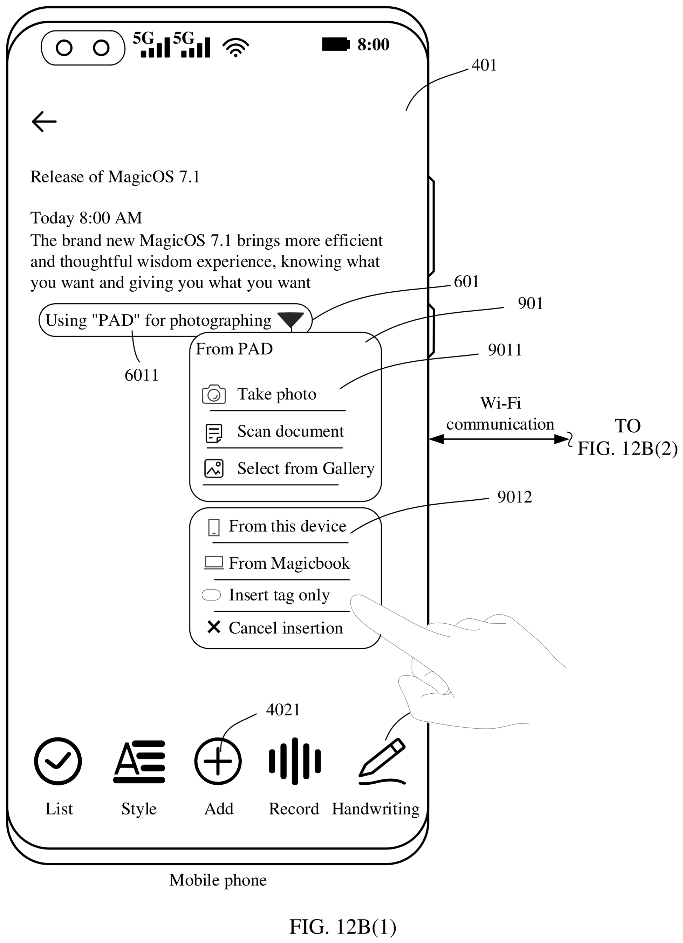

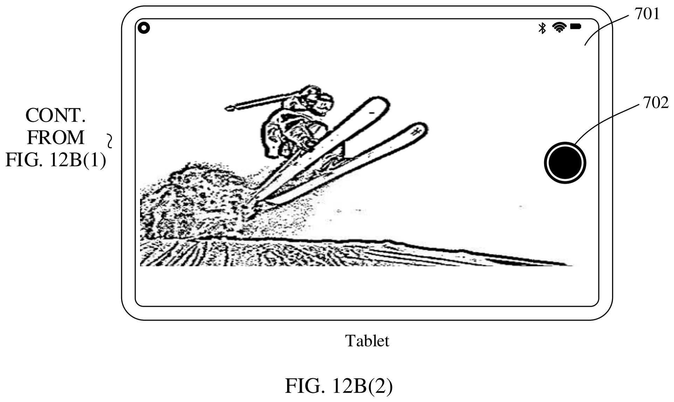

In another implementation, a tag option box (for example, a tag option box 901) may also include an "Insert tag only" option, so that the user may cancel a current invoking operation at any moment, but does not delete the tag. In this way, the tag may implement a mark function at a current position, and the user may operate the tag again at any later time, to insert a target object. For example, as shown in FIG. 12B(1) and FIG. 12B(2), that the mobile phone currently invokes a photographing function of the tablet is taken as an example for description. For specific descriptions, refer to FIG. 7A(1) and FIG. 7A(2). Details are not described herein again. For example, in a process in which the mobile phone invokes the photographing function of the tablet, the user may tap a "More" option 6012 (for related descriptions, refer to the foregoing descriptions, and details are not described herein again). The mobile phone displays the tag option box 901 in response to a received user operation. Optionally, an option box 9012 in the tag option box 901 may include an "Insert tag only" option. For descriptions of another control or option, refer to related content in the foregoing embodiments. Details are not described herein again.

For example, the user taps the "Insert tag only" option in the option box 9012, to indicate to switch a current tag 601 to a temporary tag. In response to a received operation of tapping the "Insert tag only" option by the user, the mobile phone cancels display of the tag 601, and displays the temporary tag 1201. For a display manner, refer to FIG. 12A(1) and FIG. 12A(2). Details are not described herein again. Optionally, in this example, in response to the received operation of tapping the "Insert tag only" option by the user, the mobile phone may change an invoked object 6011 in the tag 601 to an "Insert tag" prompt, for example, change a word "Using "PAD" for photographing" to a word "Inset tag", to indicate that a current tag is a temporary tag. The tablet may exit a camera interface, and return to a home screen or an interface of another application.

It should be noted that FIG. 12B(1) and FIG. 12B(2) are merely described by using a scenario in FIG. 7A(1) and FIG. 7A(2) as an example. In another embodiment, a procedure shown in FIG. 12B(1) and FIG. 12B(2) may be performed at any moment before the tablet sends a result such as an image or a character to the mobile phone. To be specific, the user may modify a currently displayed tag to a temporary tag at any moment before confirming the first insertion object.

As shown in FIG. 12C(1) and FIG. 12C(2), for example, the user may tap the "More" option 1201b in the temporary tag 1201 at any moment after inserting the temporary tag 1201, to update an insertion object. The mobile phone displays a tag option box 1202 in response to a received operation of tapping the "More" option 1201b by the user. The tag option box 1202 includes but is not limited to an option box 1202a and an option box 1202b. The option box 1202a optionally displays options corresponding to some invocable functions provided by this device (namely, the mobile phone), for example, including but not limited to a "Take photo" option, a "Scan document" option, a "Select from Gallery" option, and the like. The option box 1202b includes but is not limited to a "From PAD" option, a "From Magicbook" option, an "Insert tag only" option, a "Cancel insertion" option, and the like. The user may tap an option in the option box 1201a, to invoke a corresponding function of this device, thereby inserting a corresponding object. Optionally, the user may alternatively tap the "From PAD" option or the "From Magicbook" option in the option box 1201b, to invoke a corresponding function of the tablet or a notebook, thereby inserting a specified object. For example, the user can tap the "From PAD" option, to indicate to invoke a corresponding function of the tablet. The mobile phone establishes a Wi-Fi connection to the tablet in response to a received user operation. The mobile phone may obtain, through the Wi-Fi connection, an invocable function provided by the tablet. The mobile phone may display, in the option box 1202a, an option corresponding to the function provided by the tablet, for example, including but not limited to a "Take photo" option, a "Scan document" option, a "Select from Gallery" option, and the like. For specific descriptions, refer to FIG. 9B(1) and FIG. 9B(2). Details are not described herein again.

Optionally, the user may also delete or tap a "Cancel insertion" operation by using a cursor, to delete a temporary tag. For a specific manner, refer to the descriptions in FIG. 11A(1) and FIG. 11A(2) and FIG. 11B(1) and FIG. 11B(2). Details are not described herein again.

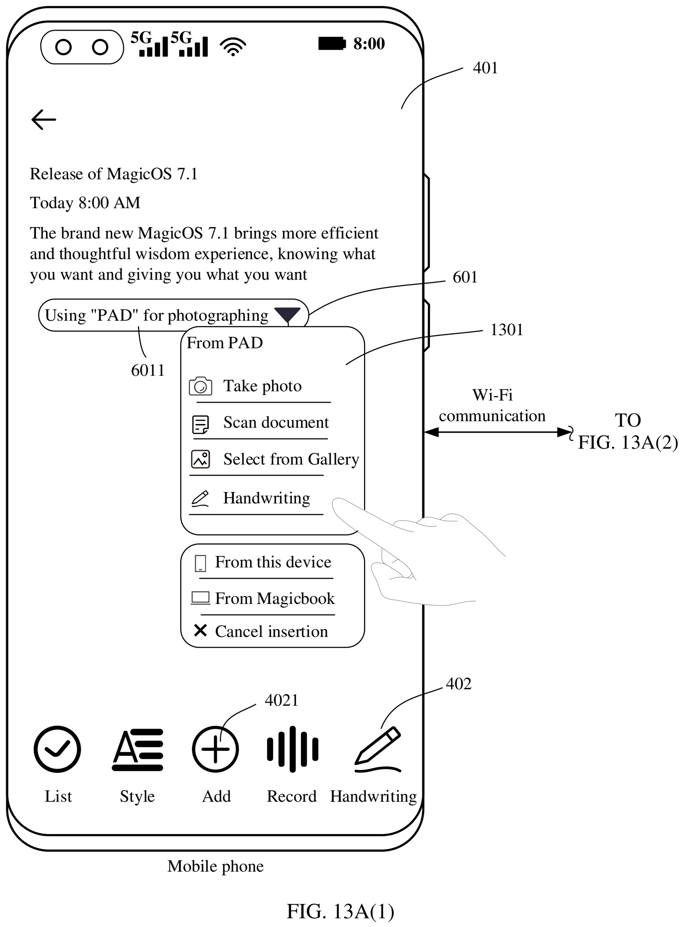

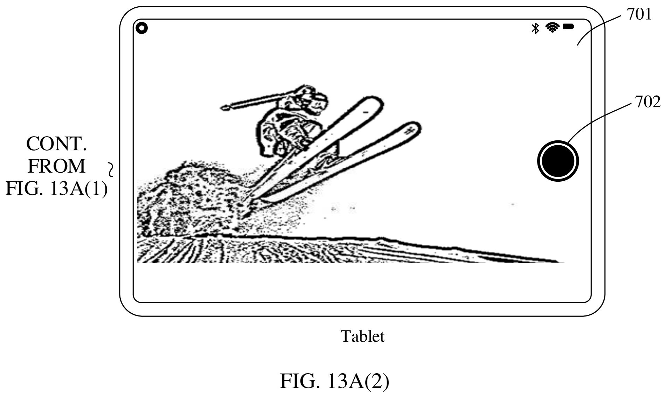

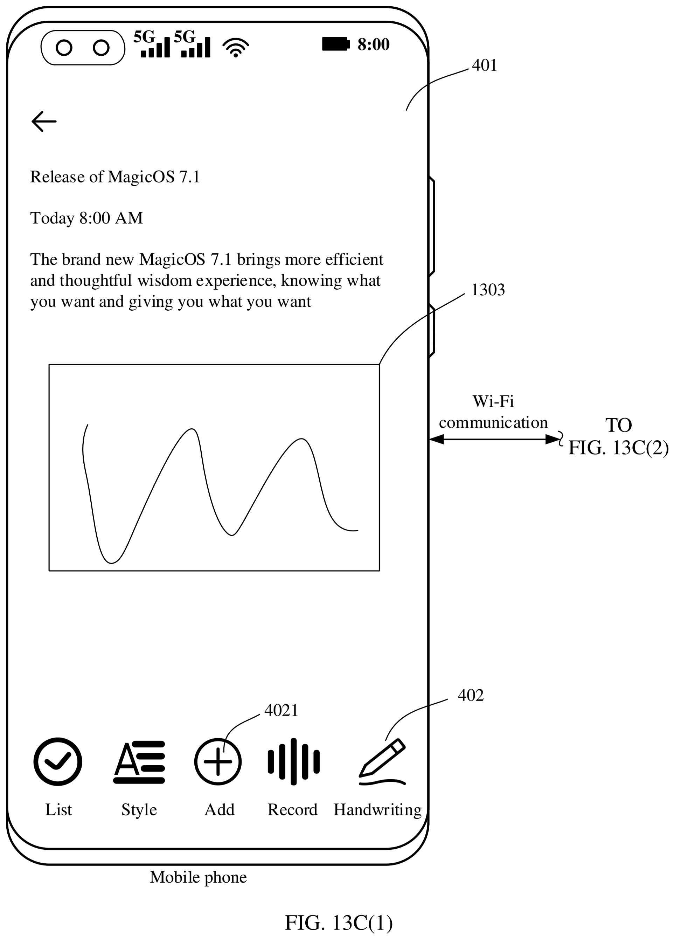

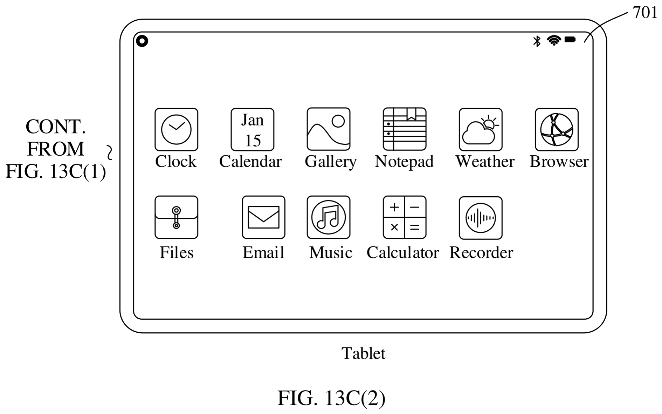

In an embodiment of this application, different electronic devices may further provide fewer or more functions than those listed in the embodiments of this application. A corresponding invocable function list option changes with an invoked device, and may be specifically displayed based on a type of the invoked device and a hardware capability. For example, FIG. 13A(1)~FIG. 13C(2) are example schematic diagrams of user interfaces. As shown in FIG. 13A(1) and FIG. 13A(2), after a mobile phone and a tablet establish a Wi-Fi connection, the mobile phone may obtain, through the Wi-Fi connection, some functions provided by a Tag application of the tablet. For example, the tablet may provide a photographing function, a document scanning function, and a select from Gallery function. Optionally, in this instance, the Tag application of the tablet registers with a handwriting application, and may invoke a handwriting board application, to provide a handwriting function for a Tag application of the mobile phone. Correspondingly, the mobile phone may learn, through the Wi-Fi connection between the mobile phone and the tablet, that the tablet may further provide the handwriting function. As shown in FIG. 13A(1) and FIG. 13A(2), a user taps a "More" option 6012 in a tag 601, and the mobile phone displays a tag option box 1301 in response to a received user operation. The tag option box 1301 includes but is not limited to a "Take photo" option, a "Scan document" option, and a "Select from Gallery" option respectively corresponding to the photographing function, the document scanning function, and the Gallery function provided by the tablet, and may further include a "Handwriting" option corresponding to the handwriting function. For other content that are not described, refer to related content in the foregoing embodiments. Details are not described herein again.

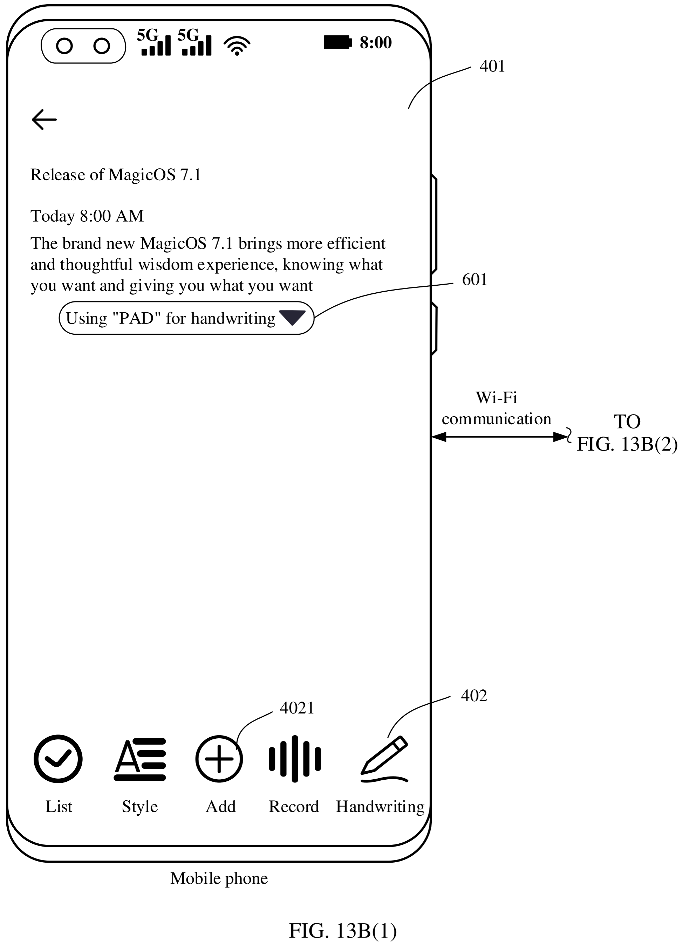

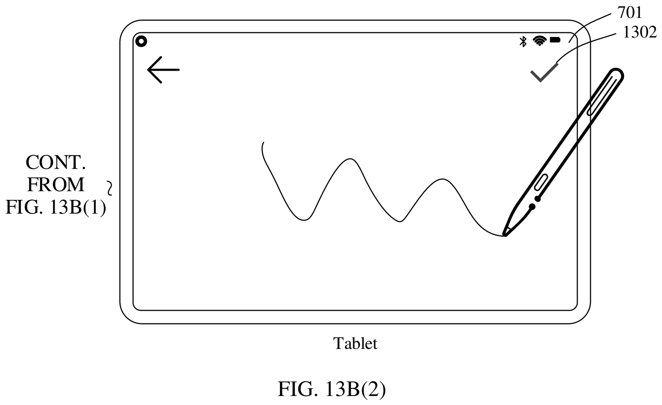

For example, the user may tap the "Handwriting" option, to indicate to invoke the handwriting function of the tablet. As shown in FIG. 13B(1) and FIG. 13B(2), for example, in response to a received user operation, the mobile phone changes an invoked object in the tag 601 to "Using "PAD" for handwriting", to indicate that a currently invoked electronic device is the tablet and an invoked function is the handwriting function of the tablet. The mobile phone sends indication information to the tablet, to indicate to invoke the handwriting function of the tablet. The tablet receives, through the Wi-Fi connection, the indication information sent by the mobile phone, and invokes a handwriting function of this device (namely, the tablet) or another application with a handwriting function, for example, Notepad. In this embodiment of this application, the Notepad application is only taken as an example for description. In another embodiment, another application may alternatively be used. This is not limited in this application.

Still as shown in FIG. 13B(1) and FIG. 13B(2), a Notepad application interface is displayed in a display interface 701 of the tablet. The Notepad application interface includes but is not limited to a handwriting input area, a "Cancel" option (which may also be referred to as a "Return" option), a "Confirm" option 1302, and the like.

For example, the user may enter corresponding content in the handwriting input area of the tablet by using a stylus. Input content in FIG. 13B(1) and FIG. 13B(2) is only an example, and is not limited in this application.

After completing entering by using the stylus, the user may tap the "Confirm" option 1302. As shown in FIG. 13C(1) and FIG. 13C(2), the tablet generates an image 1303 in response to a received user operation. The image 1303 includes content entered by the user by using the stylus. The tablet sends the image 1303 to the mobile phone through the Wi-Fi connection. In addition, the tablet displays a home screen.

For example, the mobile phone receives the image 1303 sent by the tablet. The mobile phone deletes the tag 601. In addition, the mobile phone inserts the image 1303 at a position of the original tag 601. For a specific insertion manner, refer to the foregoing descriptions. Details are not described herein again.

It should be noted that in this embodiment of this application, the handwriting function is only taken as an example for description. In another embodiment, the invoked electronic device (for example, the tablet in this embodiment of this application) may provide more functions, and may be set according to an actual requirement. This is not limited in this application.

Further, it should be noted that in FIG. 13A(1) and FIG. 13A(2), that the user selects the handwriting function from the option box 1301 is only taken as an example for description. In this example, an option display area 403 in FIG. 4C may also display the "Handwriting" option corresponding to the handwriting function provided by the tablet. After the user taps the "Handwriting" option, a procedure executed by the mobile phone and the tablet is the same as that in FIG. 13B(1)~FIG. 13C(2). Details are not described herein again.

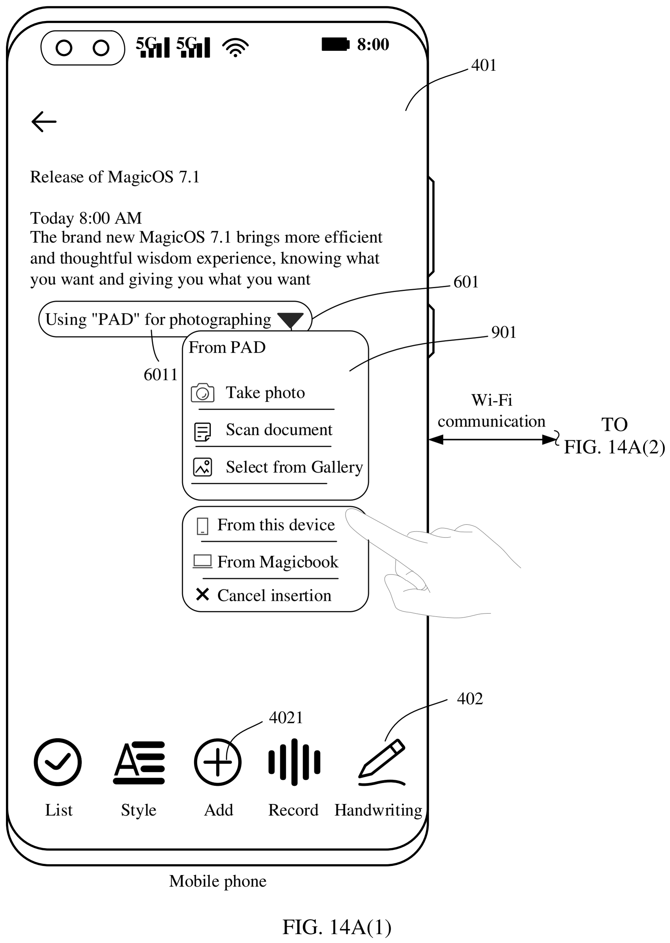

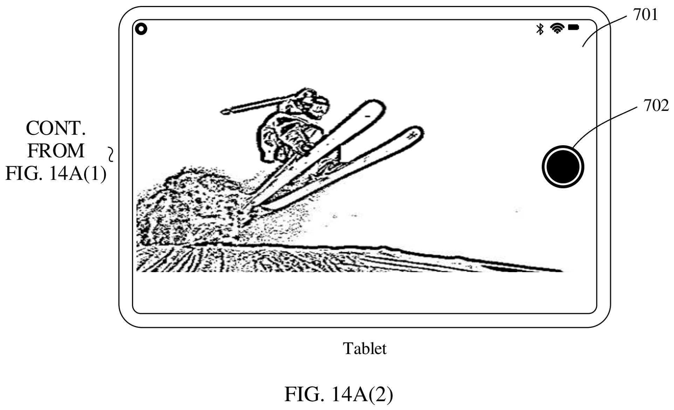

In this embodiment of this application, in a process of recording a note, the user may further invoke a related function of this device, to insert a specified object. As shown in FIG. 4B, in this embodiment of this application, the mobile phone displays an option corresponding to a first insertion object that may be provided by this device, for example, including but not limited to a "Select from Gallery" option, a "Take photo" option, a "Scan document" option, an "Add card" option, and the like. The user can tap a corresponding option, to invoke a corresponding function of this device, thereby inserting the specified object. The mobile phone invokes the corresponding function in response to a received user operation. For a specific implementation, refer to the descriptions in FIG. 14A(1) and FIG. 14A(2).

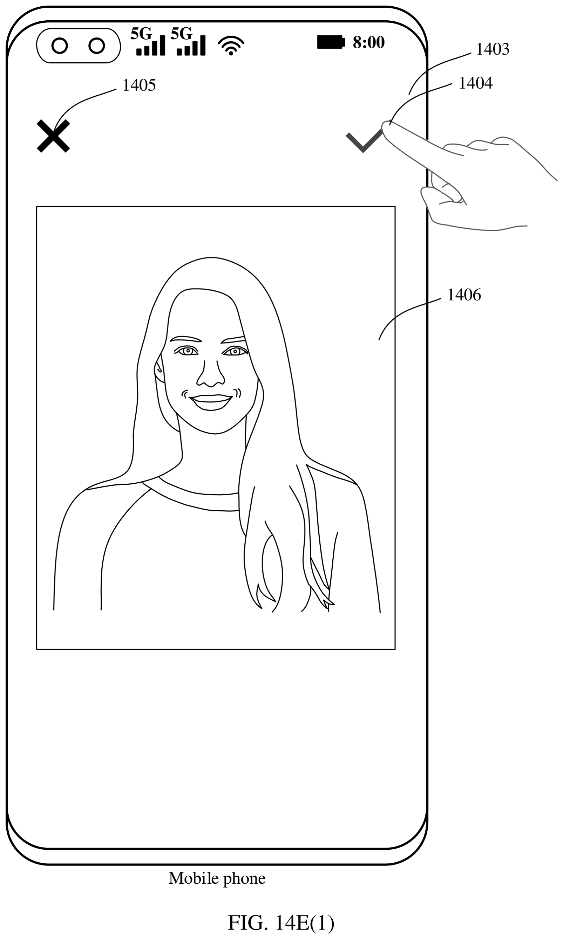

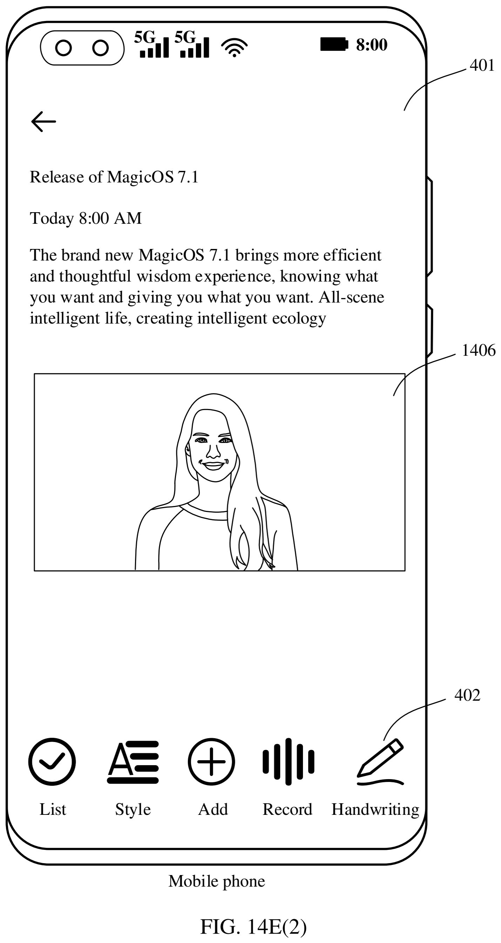

FIG. 14A(1)~FIG. 14E(2) are example schematic diagrams of user interfaces. As shown in FIG. 14A(1) and FIG. 14A(2), for example, a user taps a "More" option 6012 in a tag 601. The mobile phone displays a tag option 901 in response to a received user operation. For descriptions of options in the tag option 901, refer to FIG. 9B(1) and FIG. 9B(2). Details are not described herein again.

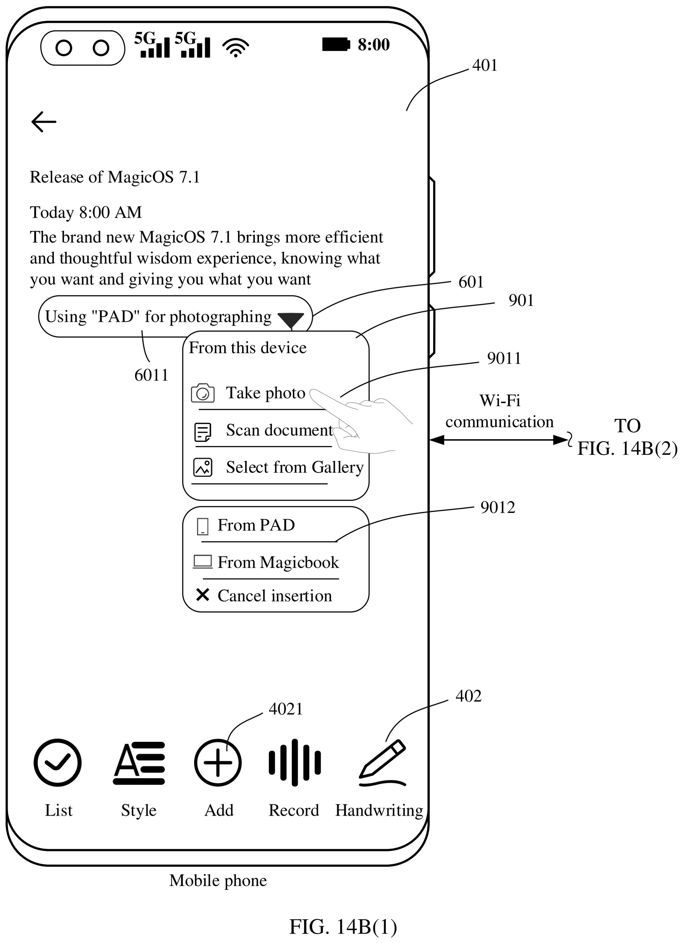

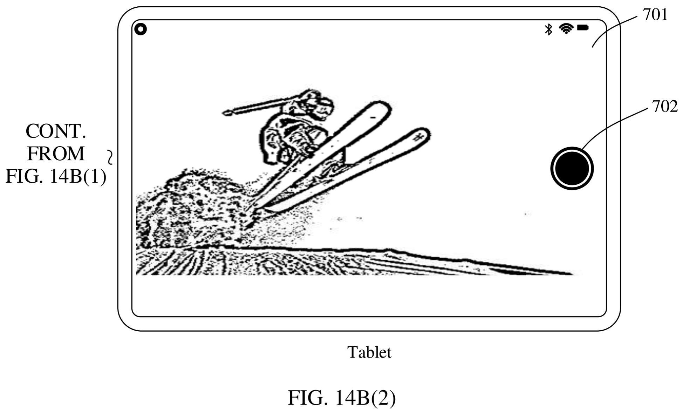

For example, the user may tap a "From this device" option, to indicate to invoke a related function of this device. As shown in FIG. 14B(1) and FIG. 14B(2), in an execution process, the mobile phone is invoking a photographing function of a tablet. For specific descriptions, refer to FIG. 7A(1) and FIG. 7A(2). Details are not described herein again. In response to a received user operation, the mobile phone displays, in an option box 9011, options such as a "Photo" option, a "Scan document" option, and a "Select from Gallery" option corresponding to the functions provided by this device. In other words, options that are provided by the tablet and that are originally displayed in the option box 9011 are replaced with the options corresponding to the functions provided by the mobile phone. To be specific, a word "From this device" is displayed at the top of the option box 9011, to indicate that all options displayed in 9011 correspond to the functions provided by the mobile phone.

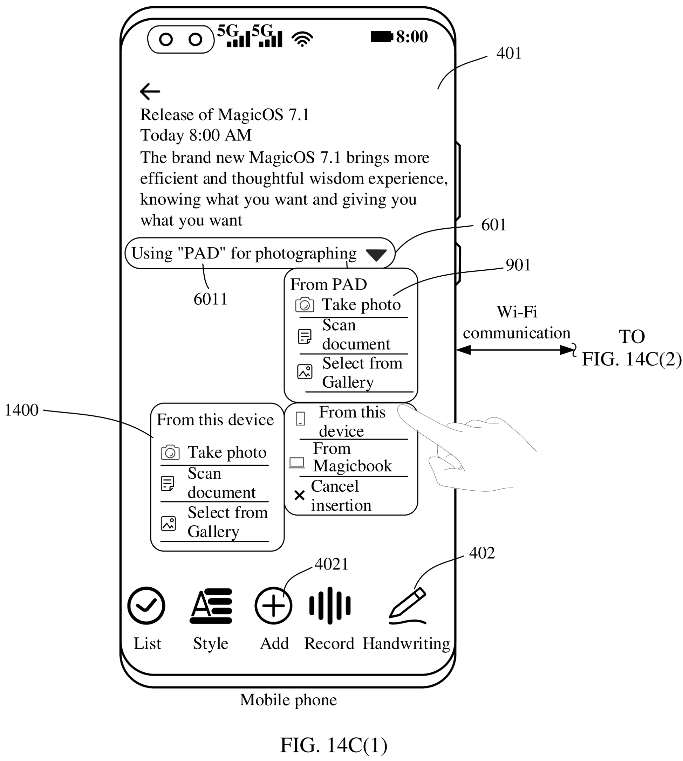

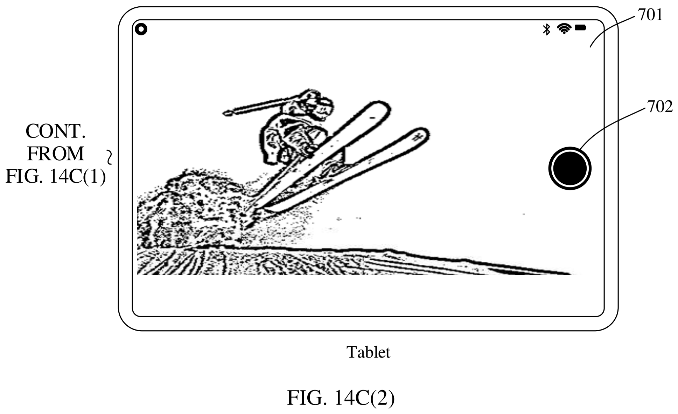

Optionally, as shown in FIG. 14C(1) and FIG. 14C(2), the mobile phone displays an option box 1401 in response to a received operation of tapping the "From this device" option by the user. In this example, the option box 1401 may be considered as a next-level option of the "From this device" option. That is, the mobile phone still displays the option box 901, and displays the option box 1401 at a position (which may be set based on a position of the option box 901 in an interface, which is not limited in this application) near the option box 901. For descriptions of the option box 1401, refer to FIG. 14B(1) and FIG. 14B(2). Details are not described herein again.

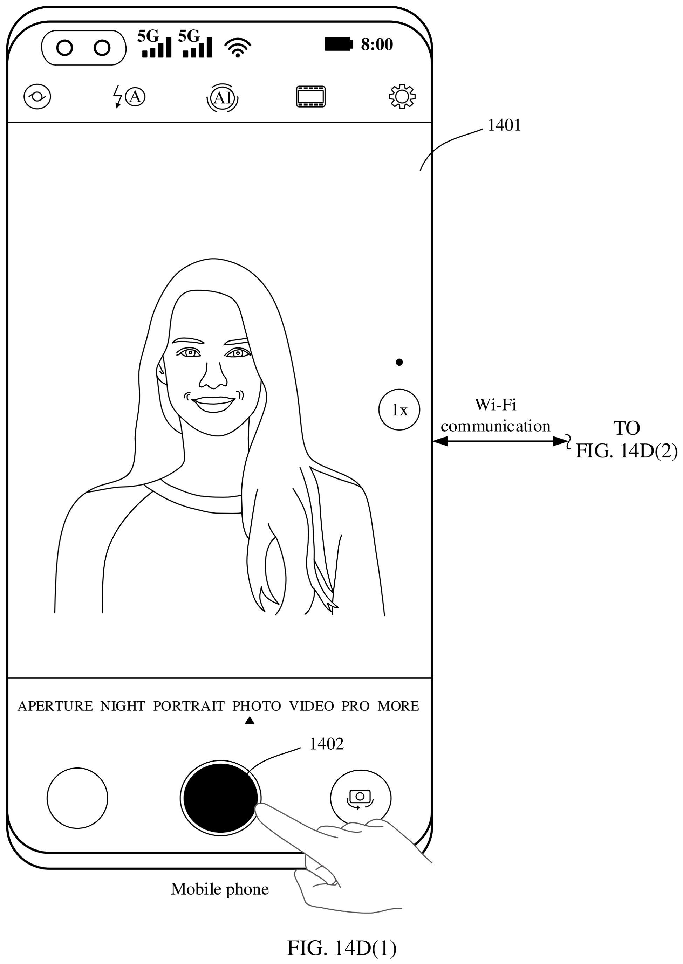

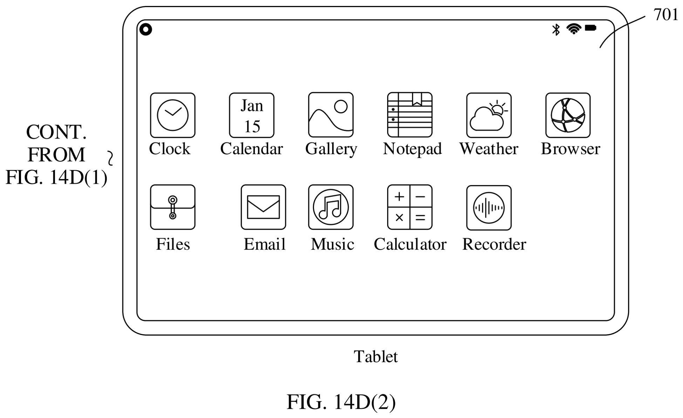

In this instance, that the user taps the "Take photo" option, to indicate to invoke a photographing function of this device is used as an example for description. As shown in FIG. 14D(1) and FIG. 14D(2), in response to a received user operation, the mobile phone determines that the user indicates to invoke the photographing function of this device. The mobile phone sends indication information to the tablet, to indicate to cancel invoking of the tablet. In response to the received indication information, the tablet cancels invoking of a local camera, and displays a home screen (or may display an interface displayed before the camera is invoked, which is not limited in this application). Optionally, a Wi-Fi connection between the mobile phone and the tablet may be disconnected, or may remain connected. This is not limited in this application.

For example, the mobile phone invokes a camera of this device. The mobile phone displays a photographing preview interface 1401. The photographing preview interface 1401 includes but is not limited to a photographing preview window and a plurality of controls. The photographing preview window displays an image captured by the camera of the mobile phone. The controls include but are not limited to a photographing control 1402, a camera switching control, and the like.

The user taps the photographing control 1402. As shown in FIG. 14E(1), the mobile phone displays an image preview interface 1403 in response to a received operation of tapping the photographing control 1402 by the user. The image preview interface 1403 includes but is not limited to a "Confirm" option 1404, a "Cancel" option 1405, and an image 1406. The image 1406 is an image captured by the camera.

The user may tap the "Confirm" option 1404, to indicate to insert the image 1406. In response to a received user operation, the mobile phone deletes the tag 601, and displays the image 1406 at a position of the original tag 601. For a specific insertion manner, refer to the foregoing descriptions. Details are not described herein again.

In a possible implementation, in this embodiment of this application, a corresponding permission for an invocable function is previously applied for. In an example, a permission corresponding to a function that may be invoked by a Tag application is default. For example, the mobile phone is taken as an example. In a process of initializing the mobile phone, the Tag application may register, with a permission management module, an access permission corresponding to a function that needs to be invoked, for example, a permission to access a camera or a permission to access Gallery. Correspondingly, in FIG. 4A, after the mobile phone responds to a received operation of tapping the "Add" option 4021 by the user, the mobile phone may detect a permission owned by the Tag application. For example, if the mobile phone detects that the Tag application has a permission to access a camera, Gallery, or the like, the mobile phone may display a corresponding option in an option display area 403 or the tag option box 901. Optionally, when the Tag application of the mobile phone subsequently invokes a function such as the photographing function of this device, the mobile phone may detect again whether the mobile phone has a corresponding access permission, or may no longer perform detection after the mobile phone detects for a first time that the mobile phone has the corresponding permission. This is not limited in this application. For another example, the tablet is taken as an example. In an initialization process, the tablet may register, with the permission management module, an access permission corresponding to a function that needs to be invoked. Correspondingly, in this embodiment of this application, after the mobile phone and the tablet establish the Wi-Fi connection, an invocable function sent by a Tag application of the tablet to the mobile phone is a function to which the Tag application has an obtained permission. In this example, the user may manually manage (for example, add or cancel) an access permission to the Tag application in a Settings application. For example, if the user may cancel, in a permission management application of the Settings application of the tablet, an access permission of the Tag application of the tablet to the camera, when the mobile phone invokes the tablet to perform the invoking method in the embodiments of this application, the invocable function sent by the tablet to the mobile phone through the Wi-Fi connection no longer includes the photographing function. Correspondingly, the option display area 403 and the tag option box 901 of the mobile phone no longer display a "Take photo" option corresponding to the tablet. In another example, a Tag application of an electronic device (for example, the mobile phone or the tablet) may display a permission list when being started for a first time. The permission list may include but is not limited to some access permissions such as a camera access permission and a Gallery access permission available to a Tag application. The user can manually select an access permission corresponding to the Tag application.

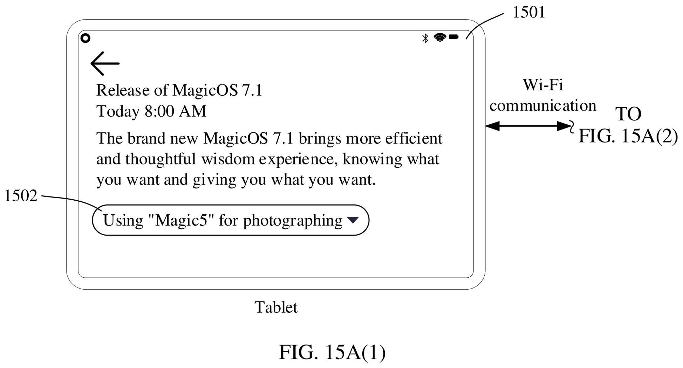

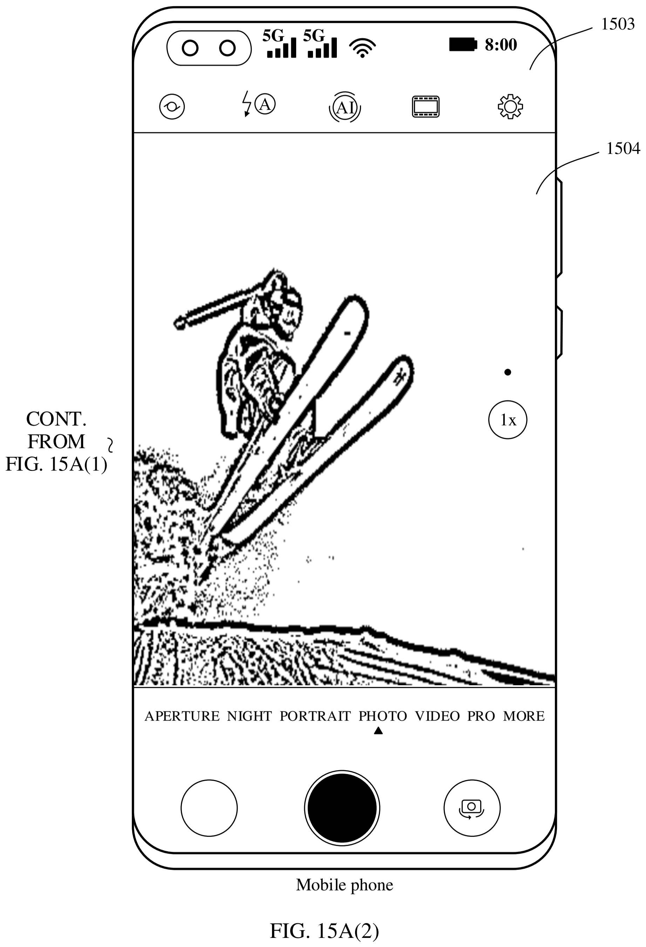

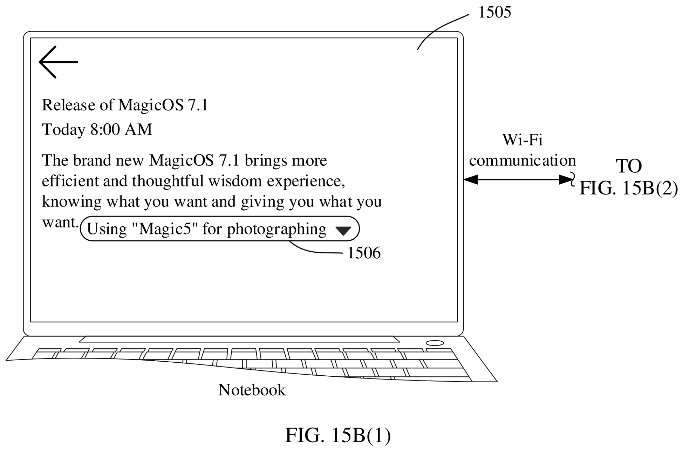

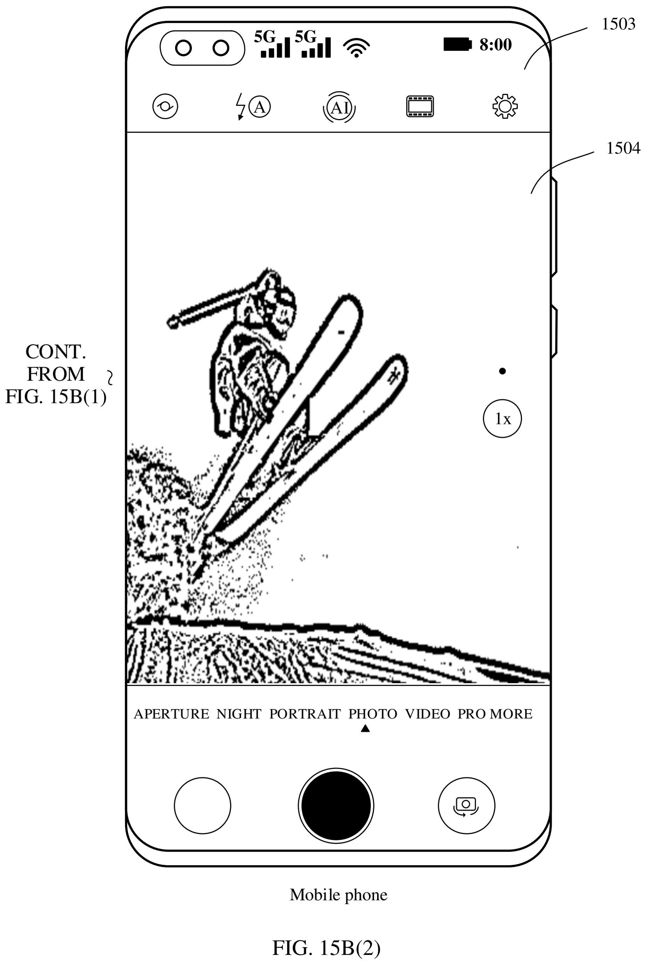

In the foregoing embodiments, that a mobile phone invokes a corresponding function of a tablet is taken as an example for description. In another embodiment, the method in the embodiments of this application may be applied to a scenario in which an electronic device, for example, a tablet, a notebook, a mobile phone, or a vehicle-mounted device, invokes another electronic device (for example, a tablet, a notebook, a mobile phone, or a vehicle-mounted device). This is not limited in this application. For example, FIG. 15A(1) and FIG. 15A(2) are an example schematic diagram of a scenario in which a tablet invokes a photographing function of a mobile phone. As shown in FIG. 15A(1) and FIG. 15A(2), the tablet invokes the photographing function of the mobile phone in response to a received user operation (for a specific operation, refer to the descriptions in FIG. 4A to FIG. 4C, and details are not described herein again). A tag 1502 is inserted into a Notepad application interface 1501 of the tablet, and the tag 1502 is used to indicate that "Magic5" is being used for photographing, that is, the photographing function of the mobile phone is being invoked. In response to an invoking request of the tablet, the mobile phone displays a photographing preview interface 1503, and the photographing preview interface 1503 displays an image 1504 captured by a camera of the mobile phone. It should be noted that FIG. 15A(1) and FIG. 15A(2) are only a schematic diagram of a scenario in an invoking process. All methods in the foregoing embodiments of this application may be applied to this scenario. For another part that is not described, refer to the foregoing descriptions. Details are not described herein again. For another example, in a process in which a user records a note by using a notebook, usually, a camera of the notebook is a front-facing camera. In this scenario, the user may invoke the camera of the mobile phone by using the notebook in the method in the embodiments of this application, to insert the image captured by the camera of the mobile phone. FIG. 15B(1) and FIG. 15B(2) are an example schematic diagram of a scenario in which a notebook invokes a photographing function of a mobile phone. As shown in FIG. 15B(1) and FIG. 15B(2), the notebook invokes the photographing function of the mobile phone in response to a received user operation. In this scenario, the user operation may be an operation triggered by the user by using a mouse or a keyboard. In some embodiments, if a display of the notebook is a touchscreen, the user may also invoke a corresponding function of the mobile phone by using the notebook by performing an operation similar to that in FIG. 4A to FIG. 4C. For example, a tag 1506 is inserted into a Notepad application interface 1505 of the notebook, and the tag 1506 is used to indicate that "Magic5" is being used for photographing, that is, the photographing function of the mobile phone is being invoked. In response to an invoking request of the notebook, the mobile phone displays a photographing preview interface 1503, and the photographing preview interface 1503 displays an image 1504 captured by the camera of the mobile phone. For other parts not described, refer to the foregoing descriptions. Details are not described herein again.

It may be understood that to implement the foregoing functions, the electronic device includes corresponding hardware and/or software modules for performing the functions. Algorithm steps in the examples described with reference to the embodiments disclosed in this specification can be implemented by hardware or a combination of hardware and computer software in this application. Whether a specific function is performed by hardware or hardware driven by computer software depends on a particular application and a design constraint of the technical solutions. A person skilled in the art may use different methods to implement the described functions with reference to embodiments for each particular application, but it should not be considered that the implementation goes beyond the scope of this application.

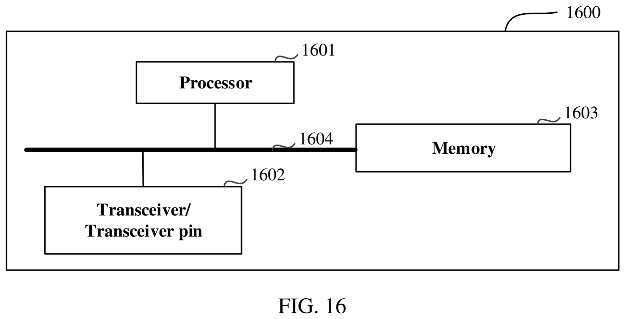

In an example, FIG. 16 is a schematic block diagram of an apparatus 1600 according to an embodiment of this application. The apparatus 1600 may include a processor 1601 and a transceiver/transceiver pin 1602. Optionally, a memory 1603 is further included.

Components in the apparatus 1600 are coupled together through a bus 1604. In addition to a data bus, the bus 1604 further includes a power bus, a control bus, and a status signal bus. However, for clarity of description, various buses are referred to as the bus 1604 in the figure.

Optionally, the memory 1603 may be configured for instructions in the foregoing method embodiments. The processor 1601 may be configured to: execute the instructions in the memory 1603, control a receive pin to receive a signal, and control a transmit pin to send a signal.

The apparatus 1600 may be the electronic device or a chip in the electronic device in the foregoing method embodiments.

All related content of the steps in the foregoing method embodiments may be cited to function descriptions of corresponding functional modules. Details are not described herein again.

An embodiment further provides a computer storage medium. The computer storage medium stores computer instructions. When the computer instructions are run on an electronic device, the electronic device is enabled to perform the steps of the related method to implement the method in the foregoing embodiments.

An embodiment further provides a computer program product. When the computer program product runs on a computer, the computer is enabled to perform the foregoing related steps to implement the method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the method in the foregoing method embodiments.

The electronic device, the computer storage medium, the computer program product, or the chip provided in the embodiments is configured to perform the corresponding method provided above. Therefore, for beneficial effects that can be achieved by the electronic device, the computer storage medium, the computer program product, or the chip, refer to the beneficial effects in the corresponding method provided above. Details are not described herein.

The foregoing embodiments are merely intended to describe the technical solutions in this application, but not intended to limit this application. Although this application is described in detail with reference to the foregoing embodiments, persons of ordinary skill in the art should understand that they may still make modifications to the technical solutions described in the foregoing embodiments or make equivalent replacements to some technical features thereof. However, these modifications or replacements do not make the essence of the corresponding technical solutions depart from the scope of the technical solutions in the embodiments of this application.

## Claims

1. An invoking method, comprising:
displaying, by a first electronic device, a first application interface, wherein input content and a first option are displayed in the first application interface;
receiving, by the first electronic device, a first operation performed on the first option;
displaying, by the first electronic device, a first tag operation block in the first application interface in response to the first operation, and sending, by the first electronic device, a first invoking request to the second electronic device, wherein the first invoking request is used to request to invoke a first target function of the second electronic device, the first tag operation block comprises first tag information, and the first tag information is used to indicate that the first electronic device is invoking the first target function of the second electronic device;
in a process in which the first electronic device invokes the first target function of the second electronic device, displaying, by the first electronic device, a first tag option box in response to a received tap operation performed on the first tag operation block, wherein the first tag option box comprises at least one second electronic device invoking option, and the at least one second electronic device invoking option corresponds to at least one function that is in the second electronic device and that is capable of being invoked by the first electronic device;
updating, by the first electronic device, the first tag information to second tag information in response to a received tap operation performed on a first invoking option, and sending, by the first electronic device, a second invoking request to the second electronic device, wherein the second invoking request is used to request to invoke a second target function of the second electronic device, the second tag information is used to indicate that the first electronic device is invoking the second target function of the second electronic device, and the first invoking option belongs to the at least one second electronic device invoking option;
receiving, by the first electronic device, a first insertion object sent by the second electronic device, wherein the first insertion object is obtained by the second electronic device based on the second target function; and
replacing, by the first electronic device, the first tag operation block with the first insertion object.

2. The method according to claim 1, wherein the replacing, by the first electronic device, the first tag operation block with the first insertion object comprises:
canceling, by the first electronic device, display of the first tag operation block; and
inserting, by the first electronic device, the first insertion object at an original display position of the first tag operation block.

3. The method according to claim 1, wherein the first tag operation block is displayed at an end of the input content.

4. The method according to claim 1, wherein the first tag operation block is displayed at a position corresponding to a last editing operation performed on the input content.

5. The method according to claim 1, wherein before the receiving, by the first electronic device, a first operation performed on a first option in the first application interface, the method further comprises:
displaying, by the first electronic device, a cursor at a first position in response to a received second operation performed at the first position; and
the displaying, by the first electronic device, a first tag operation block at a first position in the first application interface comprises:
inserting the first tag operation block at a position at which the cursor is located.

6. The method according to claim 1, wherein the first application interface further comprises a second option, and the method further comprises:
displaying, by the first electronic device, a second tag operation block in the first application interface in response to a received third operation performed on the second option, and sending, by the first electronic device, a third invoking request to the second electronic device, wherein the third invoking request is used to request to invoke a third target function of the second electronic device, the second tag operation block comprises third tag information, and the third tag information is used to indicate that the first electronic device is invoking the third target function of the second electronic device; and
in a process in which the first electronic device invokes the third target function of the second electronic device, displaying, by the first electronic device, a second tag option box in response to a received tap operation performed on the second tag operation block, wherein the second tag option box comprises at least one second electronic device invoking option and at least one device option, the at least one device option is used to indicate at least one device that is capable of being invoked by the first electronic device, and the at least one device comprises the first electronic device.

7. The method according to claim 6, wherein the second tag option box further comprises a temporary insertion option, the temporary insertion option is used to indicate to suspend invoking of the second electronic device, and the method further comprises:
updating, by the first electronic device, the second tag information in response to a received tap operation performed on the temporary insertion option, and sending, by the first electronic device, an invoking stop request to the second electronic device, wherein the invoking stop request is used to indicate to stop invoking the second electronic device, and an updated second tag information is used to indicate that the second tag operation block is a temporarily inserted tag operation block; and
displaying, by the first electronic device, the second tag option box in response to the received tap operation performed on the second tag operation block.

8. The method according to claim 6 or 7, wherein the method further comprises:
displaying, by the first electronic device, a third tag option box in response to a received fourth operation performed on a first device option, wherein the third tag option box comprises at least one third electronic device invoking option and the at least one device option, and the at least one third electronic device invoking option is used to indicate at least one function that is in the third electronic device and that is capable of being invoked by the first electronic device;
updating, by the first electronic device, the third tag information to fourth tag information in response to a received fifth operation performed on a second invoking option, and sending, by the first electronic device, a fourth invoking request to the third electronic device, wherein the fourth invoking request is used to request to invoke a fourth target function of the third electronic device, the fourth tag information is used to indicate that the first electronic device is invoking the fourth target function of the third electronic device, and the second invoking option belongs to the at least one third electronic device invoking option;
receiving, by the first electronic device, a second insertion object sent by the third electronic device, wherein the second insertion object is obtained by the third electronic device based on the fourth target function; and
replacing, by the first electronic device, the second tag operation block with the second insertion object.

9. The method according to claim 8, wherein the at least one function that is in the third electronic device and that is capable of being invoked by the first electronic device is completely or partially different from the at least one function that is in the second electronic device and that is capable of being invoked by the first electronic device.

10. The method according to claim 8, wherein the third electronic device is the first electronic device.

11. The method according to claim 1, wherein the first interface further comprises a third option, and the method further comprises:
displaying, by the first electronic device, a third tag operation block in the first application interface in response to a received fifth operation performed on the third option, wherein the third tag operation block comprises third tag information, and the third tag information is used to indicate that the third tag operation block is a temporarily inserted tag operation block.

12. The method according to any one of claims 1 to 11, wherein after the displaying, by the first electronic device, a first tag operation block in the first application interface in response to the first operation, the method further comprises:
receiving, by the first electronic device, a drag operation performed on the first tag operation block; and
moving, by the first electronic device, the first tag operation block from a current position to another position with the drag operation; and
the replacing, by the first electronic device, the first tag operation block with the first insertion object comprises:
canceling, by the first electronic device, display of the first tag operation block; and
inserting, by the first electronic device, the first insertion object at the another position.

13. The method according to any one of claims 1 to 12, wherein after the displaying, by the first electronic device, a first tag operation block in the first application interface in response to the first operation, the method further comprises:
updating, by the first electronic device, the input content in response to a received sixth operation in the process in which the first electronic device invokes the first target function of the second electronic device.

14. An electronic device, comprising:
one or more processors and a memory; and
one or more computer programs, wherein the one or more computer programs are stored in the memory, and when the computer programs are executed by the one or more processors, the electronic device is enabled to perform the following steps:
displaying a first application interface, wherein input content and a first option are displayed in the first application interface;
receiving a first operation performed on the first option;
displaying a first tag operation block in the first application interface in response to the first operation, and sending a first invoking request to the second electronic device, wherein the first invoking request is used to request to invoke a first target function of the second electronic device, the first tag operation block comprises first tag information, and the first tag information is used to indicate that the electronic device is invoking the first target function of the second electronic device;
in a process of invoking the first target function of the second electronic device, displaying a first tag option box in response to a received tap operation performed on the first tag operation block, wherein the first tag option box comprises at least one second electronic device invoking option, and the at least one second electronic device invoking option corresponds to at least one function that is in the second electronic device and that is capable of being invoked by the electronic device;
updating the first tag information to second tag information in response to a received tap operation performed on a first invoking option, and sending a second invoking request to the second electronic device, wherein the second invoking request is used to request to invoke a second target function of the second electronic device, the second tag information is used to indicate that the electronic device is invoking the second target function of the second electronic device, and the first invoking option belongs to the at least one second electronic device invoking option;
receiving a first insertion object sent by the second electronic device, wherein the first insertion object is obtained by the second electronic device based on the second target function; and
replacing the first tag operation block with the first insertion object.

15. The electronic device according to claim 14, wherein when the computer programs are executed by the one or more processors, the electronic device is enabled to perform the following steps:
canceling display of the first tag operation block; and
inserting the first insertion object at an original display position of the first tag operation block.

16. The electronic device according to claim 14, wherein the first tag operation block is displayed at an end of the input content.

17. The electronic device according to claim 14, wherein the first tag operation block is displayed at a position corresponding to a last editing operation performed on the input content.

18. The electronic device according to claim 14, wherein before the electronic device receives the first operation performed on the first option in the first application interface, when the computer programs are executed by the one or more processors, the electronic device is enabled to perform the following steps:
displaying a cursor at a first position in response to a received second operation performed at the first position; and
the displaying a first tag operation block at a first position in the first application interface comprises:
inserting the first tag operation block at a position at which the cursor is located.

19. The electronic device according to claim 14, wherein the first application interface further comprises a second option, and when the computer programs are executed by the one or more processors, the electronic device is enabled to perform the following steps:
displaying a second tag operation block in the first application interface in response to a received third operation performed on the second option, and sending a third invoking request to the second electronic device, wherein the third invoking request is used to request to invoke a third target function of the second electronic device, the second tag operation block comprises third tag information, and the third tag information is used to indicate that the electronic device is invoking the third target function of the second electronic device; and
in a process of invoking the third target function of the second electronic device, displaying a second tag option box in response to a received tap operation performed on the second tag operation block, wherein the second tag option box comprises at least one second electronic device invoking option and at least one device option, the at least one device option is used to indicate at least one device that is capable of being invoked by the electronic device, and the at least one device comprises the electronic device.

20. The electronic device according to claim 19, wherein the second tag option box further comprises a temporary insertion option, the temporary insertion option is used to indicate to suspend invoking of the second electronic device, and when the computer programs are executed by the one or more processors, the electronic device is enabled to perform the following steps:
updating the second tag information in response to a received tap operation performed on the temporary insertion option, and sending an invoking stop request to the second electronic device, wherein the invoking stop request is used to indicate to stop invoking the second electronic device, and an updated second tag information is used to indicate that the second tag operation block is a temporarily inserted tag operation block; and
displaying the second tag option box in response to the received tap operation performed on the second tag operation block.

21. The electronic device according to claim 19 or 20, wherein when the computer programs are executed by the one or more processors, the electronic device is enabled to perform the following steps:
displaying a third tag option box in response to a received fourth operation performed on a first device option, wherein the third tag option box comprises at least one third electronic device invoking option and the at least one device option, and the at least one third electronic device invoking option is used to indicate at least one function that is in the third electronic device and that is capable of being invoked by the electronic device;
updating the third tag information to fourth tag information in response to a received fifth operation performed on a second invoking option, and sending a fourth invoking request to the third electronic device, wherein the fourth invoking request is used to request to invoke a fourth target function of the third electronic device, the fourth tag information is used to indicate that the electronic device is invoking the fourth target function of the third electronic device, and the second invoking option belongs to the at least one third electronic device invoking option;
receiving a second insertion object sent by the third electronic device, wherein the second insertion object is obtained by the third electronic device based on the fourth target function; and
replacing the second tag operation block with the second insertion object.

22. The electronic device according to claim 21, wherein the at least one function that is in the third electronic device and that is capable of being invoked by the electronic device is completely or partially different from the at least one function that is in the second electronic device and that is capable of being invoked by the electronic device.

23. The electronic device according to claim 22, wherein the third electronic device is the electronic device.

24. The electronic device according to claim 14, wherein the first interface further comprises a third option, and when the computer programs are executed by the one or more processors, the electronic device is enabled to perform the following step: displaying a third tag operation block in the first application interface in response to a received fifth operation performed on the third option, wherein the third tag operation block comprises third tag information, and the third tag information is used to indicate that the third tag operation block is a temporarily inserted tag operation block.

25. The electronic device according to any one of claims 14 to 24, wherein after the first electronic device displays the first tag operation block in the first application interface in response to the first operation, when the computer programs are executed by the one or more processors, the electronic device is enabled to perform the following steps:
receiving a drag operation performed on the first tag operation block;
moving the first tag operation block from a current position to another position with the drag operation;
canceling display of the first tag operation block; and
inserting the first insertion object at the another position.

26. The electronic device according to any one of claims 14 to 25, wherein after the displaying, by the first electronic device, a first tag operation block in the first application interface in response to the first operation, when the computer programs are executed by the one or more processors, the electronic device is enabled to perform the following steps:
updating the input content in response to a received sixth operation in the process of invoking the first target function of the second electronic device.

27. A computer storage medium, comprising computer instructions, wherein when the computer instructions are run on an electronic device, the electronic device is enabled to perform the method according to any one of claims 1-13.

28. A computer program product, wherein when the computer program product runs on a computer, the computer is enabled to perform the method according to any one of claims 1-13.

29. A chip, comprising one or more interface circuits and one or more processors, wherein the interface circuit is configured to: receive a signal from a memory of an electronic device, and send the signal to the processor, wherein the signal comprises computer instructions stored in the memory, and when the processor executes the computer instructions, the electronic device is enabled to perform the method according to any one of claims 1-13.
